# EUROPÄISCHE PATENTSCHRIFT

(11) **EP 0 303 870 B1**
(45) Veröffentlichungstag und Bekanntmachung des Hinweises auf die Patenterteilung: **23.03.1994**
(21) Anmeldenummer: 88112267.5
(22) Anmeldetag: 28.07.1988
(51) Int. Cl.: H04Q 11/04, H04Q 3/545, H04M 3/22

(54) **Modular strukturiertes digitales Kommunikationssystem mit betriebstechnischen und sicherheitstechnischen Komponenten**
Modular structured digital communication system with operational and reliable components
Système de commutation digitale à structure modulaire avec des composants opérationnels et mûrs

(30) Priorität: 21.08.1987 DE 3727942
(43) Veröffentlichungstag der Anmeldung: 22.02.1989
(73) Patentinhaber: SIEMENS AKTIENGESELLSCHAFT, 80333 München (DE)
(72) Erfinder: Sonnemann, Manfred, Dipl.-Ing., D-8031 Alling (DE); Schweiger, Franz, Dipl.-Ing., A-1232 Wien (AT); Kuhlmann, Klaus, Dipl.-Ing., D-8000 München 5 (DE); Elstner, Siegfried, Dipl.-Ing., D-8031 Eichenau (DE); Verlohr, Axel, Dipl.-Ing., D-8000 München 71 (DE); Muyssen, John, Dipl.-Ing., B-9050 Evergem (BE); Lybeer, Roger, Dipl.-Ing., B-9120 Destelbergen (BE)

(56) Entgegenhaltungen:
- TELESIS/BNR, Nr. 1, 1987, Seiten 15-21, Ottawa, CA; D. FRAME et al.: "Meridian SL-100 building block technologies bring digital to the desktop"
- NACHRICHTENTECHNISCHE ZEITSCHRIFT N.T.Z., Band 39, Nr. 6, Juni 1986, Seiten 394-397, Berlin, DE; F. KADERALI et al.: "Steuerungskonzept einer ISDN-Vermittlungsanlage"
- PROCEEDINGS OF THE INTERNATIONAL SWITCHING SYMPOSIUM, Florenz, 7.-11. Mai 1984,Teil 1, Seiten 1-7, North-Holland, Amsterdam, NL; G. RAAB et al.:"Architectural aspects for ISDN-PABX's in office communications systems"
- TELCOM REPORT, Sonderausgabe, 1985, "ISDN im Büro-HICOM", Seiten 67-75,München, DE; G. OTT et al.: "HICOM-Software von heute für morgen"

## Beschreibung

Modular strukturierte digitale Kommunikationssysteme dienen zur Verbindung von Endgeräten mit im allgemeinen vielfältigen Leistungsmerkmalen untereinander und zur Verbindung dieser Endgeräte mit Kommunikationsnetzen, insbesondere öffentlichen Netzen. Durch eine Sonderausgabe von "Telcom Report" - ISDN im Büro - 1985, ist ein derartiges Kommunikationssystem bekannt, an das analoge und digitale Telefone, Fernkopierer, multifunktionale Terminals, Arbeitsplatzsysteme, Personal Computer, Teletex- und Bildschirmtextstationen und Datenendgeräte anschließbar sind; ebenso kann eine Vernetzung mit anderen Kommunikationssystemen hergestellt werden. Wesentlicher Bestandteil dieses Kommunikationssystems ist ein zentraler Kommunikationsrechner mit einer Systemdatenbasis und zumindest einem Multitasking-Betriebssystem. Unter einer "Task" ist dabei eine selbständige unabhängige Ablaufeinheit zu verstehen, die aus einem ablauffähigen Programm sowie seiner jeweiligen Ablaufumgebung, z. B. Speicherbelegung oder Gerätezuteilung, besteht. Jede Task befindet sich zu jedem Zeitpunkt in einem der Zustände "Aktiv", "Warten" oder "Ruhe". Tasks können vermittels eines Multitasking-Betriebssystems parallel zueinander ablaufen, wobei dies in der Praxis sowohl mittels mehrerer unabhängig voneinander arbeitender Prozessoren als auch mittels eines einzigen Prozessors in einem Zeitmultiplexverfahren erfolgen kann. Weitere wesentliche Eigenschaften von Tasks sind, daß sie mittels Meldungen miteinander kommunizieren und sich gegenseitig synchronisieren können.

Die Leistungsfähigkeit eines derartigen digitalen Kommunikationssystems wird wesentlich durch die Software-Struktur des Systems bestimmt. Das bekannte Kommunikationssystem weist eine modular strukturierte Software-Architektur auf, deren wesentliche Bestandteile einerseits das Multitasking-Betriebssystem bzw. die Datenbasis und andererseits die eigentliche Vermittlungs-Software, bestehend aus der Peripherie-Software, der Leitungstechnik-Software und der vermittlungstechnischen Verbindungs-Software sind. Die Verteilung von Teilkomplexen der Steuerungs-Software auf einzelne Software-Module bzw. die gesamte Software-Struktur des bekannten Kommunikationssystems sind auf eine Anlagengröße von mehreren hundert bis zu mehreren tausend Anschlüssen abgestimmt.

Die Leistung und der Nutzen eines derartigen Kommunikationssystems hängen wesentlich von der Organisierbarkeit und Wartbarkeit des Systems, die neben anderen Aspekten unter den Begriff Betriebstechnik subsumiert werden, und von der Fehlererkennung, Fehleranzeige und Fehlerbeseitigung ab, die neben anderen Aspekten unter den Begriff Sicherheitstechnik subsumiert werden.

Die Organisierbarkeit des Systems soll die Berücksichtigung individueller Nutzeranforderungen bezüglich des Anlagenausbaus, des Numerierungsplans, der Geräte- und Kommunikationsdienstevielfalt auf schnelle, einfache, sichere und bedienungsfreundliche Weise ermöglichen. Die wichtigsten Aufgaben der Wartung sind beispielsweise manuelle Schaltaufträge für das Sperren, Entsperren und Umschalten von Systemeinheiten, manuelle Prüfaufträge, die Ablaufverfolgung und Diagnosegewinnung sowie eine Klartext-Ausgabe für den Anlagenbetreiber. Voraussetzung für die Organisierbarkeit und Wartbarkeit des Systems ist eine umfassende "Verwaltung" des Kommunikationssystems; zu dieser "Verwaltung" gehören Datenspeichergenerierung und -regenerierung, Speicherung und Pflege der Kundendaten für Anlagenkonfiguration, Kommunikationsdienste und Endgeräte sowie Verkehrsmessungen.

Die wichtigsten Aufgaben der Sicherheitstechnik sind Testroutinen, der System-Hardwarekomponenten, die Ermittlung von auftretenden Fehlern in Hardwarekomponenten oder in der Steuer-Softwareebene des Kommunikationssystems durch Überwachung bestimmter systemtypischer Indikatoren innerhalb bestimmter vermittlungstechnischer oder betriebstechnischer Zustände, generelle Funktionsüberwachung unter Einsatz von Test-Schaltvorgängen und statistische Fehlerauswertungen.

Die der Erfindung zugrundeliegende Aufgabe besteht darin, eine Steuer- und Organisationsstruktur für die Durchführung sämtlicher vermittlungstechnischen, betriebstechnischen und sicherheitstechnischen Aufgaben zu schaffen, die einen optimalen Kompromiß bezüglich der unterschiedlichen Anforderungen dieser drei Aufgabenfelder an die Steuer- und Organisationsstruktur eines digitalen Kommunikationssystems darstellt.

Diese Aufgabe wird gelöst durch ein modular strukturiertes digitales Kommunikationssystem zur Verbindung von Endgeräten untereinander und mit insbesondere öffentlichen Netzen
- mit wenigstens einem Betriebstechnik-Endgerät,
- mit wenigstens einem aus systemsicherheitstechnischen Prüfvorgängen gewonnene Alarmmeldungen anzeigenden Alarmanzeigeendgerät und
- mit einem zentralen Systemrechner mit einer Systemdatenbasis und zumindest einem Multitasking-Betriebssystem
   -- zur Verwaltung einer Leitungstechnik-Taskstruktur mit endgeräteartenspezifischen Geräteprogrammodulen zum Generieren logischer Meldungen und/oder Betriebstechnik-Meldungen aus an den Endgeräten und/oder Betriebstechnik-Endgeräten vorgenommenen Eingaben und zur Abgabe von aus logischen Meldungen oder Betriebstechnik-Meldungen oder Alarmmeldungen gewonnenen geräteartspezifischen Einstelldaten für die Endgeräte und/oder Betriebstechnik-Endgeräte oder Alarmanzeigeendgeräte,
   -- zur Verwaltung einer Betriebstechnik- und Vermittlungstechnik-Koordinierung-Taskstruktur mit einem betriebstechnischen Koordinierung-Programmodul zur Steuerung des betriebstechnischen Informations- und Datenflusses, mit Vermittlungsprozedur-Programmodulen, die endgeräteklassenunabhängig und kommunikationsdiensteunabhängig im Sinne der Bildung logischer Teilprozesse des gesamten Vermittlungsprozesses derart strukturiert sind, daß neben wenigstens einem Verbindungssteuerung-Programmodul für die Steuerung des Aufbaus und Abbaus von Verbindungen weitere Leistungsmerkmal-Programmodule für die Aktivierung und Deaktivierung von entsprechenden Steuerprozeduren gebildet sind und mit wenigstens einem sicherheitstechnischen Prüf- und Auswerte-Programmodul zur Durchführung nicht zeitkritischer sicherheitstechnischer Prüf- und Auswertevorgänge und
   -- zur Verwaltung einer betriebs- und sicherheitstechnischen Applikation-Taskstruktur mit Applikation-Programmodulen zur Abwicklung applikationsorientierter Funktionen, z. B. Inbetriebnahme, Wartung, Fernbetriebstechnik, Systemzustandswiederherstellung (recovery),
      --- wobei zumindest einem Teil der Programmodule jeweils individuell über definierte Datenbasiszugriffsroutinen die Datenbasis zugänglich ist und
      --- zur Verbindung der Leitungstechnik-Taskstruktur mit der Betriebstechnik- und Vermittlungstechnik-Koordinierung-Taskstruktur bzw. zu deren Verbindung mit der betriebs- und sicherheitstechnischen Applikation-Taskstruktur eine Programm-Busstruktur mit wenigstens einem kommunikationsdienste- und endgeräteartenunabhängig allgemeingültig festgelegten Übertragungsprotokoll der darüber übermittelten Meldungen vom Multitasking-Betriebssystem gebildet und verwaltet wird.

In diesem modular strukturierten digitalen Kommunikationssystem sind in einer Leitungstechnik-Task Geräteprogrammodule angeordnet, die bezüglich der Vermittlungstechnik endgeräteartenspezifisch das Signalisierungsverfahren und die Benutzeroberfläche der Endgeräte derart steuern, daß von den Endgeräten abgegebene Anreize mittels systemspezifischer Parameter in logische Meldungen für den Kommunikationsrechner und logische Meldungen des Kommunikationsrechners in Einstelldaten für die Endgeräte umgesetzt werden. In einer eine zweite Strukturebene darstellenden Vermittlungstechnik-Task sind Vermittlungsprozedur-Programmodule vorgesehen, die endgeräteklassenunabhängig und kommunikationsdiensteunabhängig im Sinne der Bildung logischer Teilprozesse des gesamten Vermittlungsprozesses strukturiert sind.

Mit dieser Organisations- und Steuerstruktur der Vermittlungstechnik des Kommunikationssystems ist der für die Praxis wesentliche Vorteil verbunden, daß ein derartiges Kommunikationssystem in einer beliebigen Erstausstattung später jederzeit durch zusätzliche Endgerätearten und Kommunikationsdienste ergänzbar ist, ohne daß die Grundstruktur des modular strukturierten Kommunikationssystems geändert werden muß. Bei Auftreten neuer Endgerätearten oder Kommunikationsdienste muß lediglich ein entsprechendes Geräteprogrammodul in die Leitungstechnik-Task eingefügt werden, während die übrigen Strukturbestandteile, also insbesondere die Vermittlungstechnik-Task, davon unbeeinflußt bleiben. Dies ist im wesentlichen dadurch bedingt, daß die Abhängigkeiten von Kommunikationsdiensten und Endgerätearten allein in den Bereich der Leitungstechnik-Task bzw. in den der Datenbasis verlegt sind, so daß die Vermittlungstechnik-Koordinierung-Task auf eine reine Verbindungssteuerung unabhängig von der Art der miteinander zu verbindenden Endgeräte und der von diesen genutzten Kommunikationsdienste ausgelegt werden kann.

Ein wesentlicher Aspekt des erfindungsgemäßen digitalen Kommunikationssystems besteht in der Einbettung betriebstechnischer und sicherheitstechnischer Funktionen in Geräteprogrammodule der Leitungstechnik-Taskstruktur und in Programmodule einer Betriebstechnik- und Vermittlungstechnik-Koordinierung-Taskstruktur sowie in jeweils wenigstens ein Applikation-Programmodul einer betriebs- und sicherheitstechnischen Applikation-Taskstruktur.

Die erfindungsgemäße Organisations- und Steuerstruktur basiert also im wesentlichen auf der Abwicklung aller gerätespezifischen Funktionsabläufe im Rahmen betriebstechnischer Aufträge in Betriebstechnik-Geräteprogrammodulen, im Rahmen sicherheitstechnischer Aufträge in Sicherheitstechnik-Geräteprogrammodulen und im Rahmen vermittlungstechnischer Aufträge in Vermittlungsprozedur-Programmodulen, d. h. in der Schaffung von geräteartunabhängigen virtuellen Schnittstellen, sowie einerseits in der Steuerung und Realisierung aller funktionalen Abläufe für den vermittlungstechnischen, betriebstechnischen und sicherheitstechnischen Informations- und Datenfluß in Programmodulen der Betriebstechnik- und Vermittlungstechnik-Koordinierung-Taskstruktur und andererseits der Abwicklung aller applikationsorientierten Aufgaben in Applikation-Programmodulen der betriebs- und sicherheitstechnischen Applikation-Taskstruktur.

Ergänzt werden diese Strukturmerkmale durch die Anwendung standardisierter Mechanismen zwischen den einzelnen Taskstrukturebenen durch Einsatz bestimmter Übertragungsprotokolle.

Die Struktur des erfindungsgemäßen Kommunikationssystems ermöglicht für die Realisierung aller vermittlungstechnischen, betriebstechnischen und sicherheitstechnischen Komponenten eine ausgeprägte strikte Modularität in dem Sinne, daß ein derartiges Kommunikationssystem jeweils kundenspezifisch ohne Anpassungen außerhalb der eigentlichen Programmodule aufgebaut werden kann und daß das spätere Hinzutreten neuer Endgerätearten, neuer Leistungsmerkmale solcher Endgeräte oder das Auftreten neuer Kommunikationsdienste mit den vorhandenen oder neuartigen Endgeräten sowohl bezüglich der Vermittlungstechnik als auch der Betriebstechnik und der Sicherheitstechnik des gesamten Kommunikationssystems durch Hinzufügen neuer Module, insbesondere von Geräteprogrammodulen und Applikation-Programmodulen beherrscht werden kann. Das erfindungsgemäße Kommunikationssystem bietet also in allen Aspekten eine ausgeprägte Anpassungsfähigkeit an einen umfangreichen bzw. veränderbaren Leistungsumfang ohne objektive Beeinflussung der eigentlichen Systemstruktur bzw. der dieser Systemstruktur zugrundeliegenden Systemstrategie.

Eine vorteilhafte Weiterbildung der Erfindung betrifft eine noch weitergehende strukturelle Zusammenführung der vermittlungstechnischen, betriebstechnischen und sicherheitstechnischen Aspekte und sieht in diesem Zusammenhang vor, daß zumindest ein Teil der Geräteprogrammodule neben einem auf die jeweilige Hauptfunktion - Vermittlungstechnik, Betriebstechnik - der zugehörigen Endgeräteart abgestimmten Teilmodul ein weiteres, auf sicherheitstechnische Funktionen abgestimmtes zweites Teilmodul aufweist. Sofern ein derartiges Geräteprogrammodul einem vermittlungstechnischen Endgerät zugeordnet ist, kann das entsprechende Geräteprogrammodul ein auf betriebstechnische Funktionen abgestimmtes drittes Teilmodul aufweisen.

Die Struktur und Wirkungsweise der derart strukturierten Geräteprogrammodule ist bevorzugt derart, daß die Geräteprogrammodule eine von den Endgeräten bzw. Betriebstechnik-Endgeräten abgegebene Anreize nach individuellen Leitungskriterien bewertende und Meldungen aus der Betriebstechnik- und Vermittlungstechnik-Koordinierung-Taskstruktur in Einstelldaten für die Endgeräte, Betriebstechnik-Endgeräte oder Alarmanzeigeendgeräte umsetzende Vorverarbeitungs-Programmebene und eine die Anreize aller Endgerätearten mittels systemspezifischer Parameter in protokollgerechte Meldungen umsetzende Bewertungs-Programmebene aufweisen und daß ein in der Bewertungs-Programmebene residentes Zuordnungsprogramm jeweils funktionsabhängig Meldungen und Informationen auf die Teilmodule verzweigt.

In ähnlicher Weise können auch das Koordinierung-Programmodul und die Vermittlungsprozedur-Programmodule ein auf sicherheitstechnische Aspekte abgestimmtes Teilmodul aufweisen.

In bezug auf die Meldungen, die zwischen den einzelnen Taskstrukturen ausgetauscht werden, kann vorgesehen werden, daß das kommunikationsdienste- und endgeräteartenunabhängig allgemeingültig festgelegte Übertragungsprotokoll für die Übermittlung von vermittlungstechnischen Meldungen genutzt wird, während darüberhinaus für die Programm-Busstruktur ein (ebenfalls) kommunikationsdienste- und endgeräteartenunabhängig definiertes virtuelles Terminalprotokoll für zwischen der Leitungstechnik-Taskstruktur und der Betriebstechnik-Koordinierung-Taskstruktur übertragene betriebstechnische Meldungen und ein ebenfalls kommunikationsdienste- und endgeräteartenunabhängig definiertes, eine zumindest annähernd steuerzeichenfreie, gedrängte Datenanordnung vorsehendes, virtuelles Applikationsprotokoll für innerhalb der Applikation-Taskstruktur und zwischen dieser und der Betriebstechnik-Koordinierung-Taskstruktur übertragene Meldungen vorgesehen ist und daß ein Textprozessor-Programmodul zur Konvertierung von Meldungen in einem der beiden Übertragungsprotokolle in Meldungen im jeweils anderen Übertragungsprotokoll dient.

Das virtuelle Terminalprotokoll besteht bevorzugt aus einer Sequenz von Steuerinformationen und Dateninformationen, wobei die Dateninformationen aus üblichen Stringelementen, vorzugsweise im ASCII-Format, bestehen und die Steuerinformationen logische Steuerkriterien für die Ein- und Ausgabe solcher Stringelemente (z. B. Positionieranweisungen, Abbildungsattribute und Feldzuordnungskriterien) enthalten. Das virtuelle Terminalprotokoll dient somit als Datenschnittstelle eines virtuellen Terminals, als daß sich in dieser Schnittstelle jedes Terminal vom und zum System darstellt. Um die Informationen im virtuellen Terminalprotokoll möglichst effizient übertragen zu können, kann vorgesehen werden, daß in den Meldungen jeweils nur gegenüber einem einer vorhergehenden Meldung zugrundeliegenden Zustand geänderte Daten übertragen werden. Bei einer Übertragung derartig geänderter Daten muß allerdings zwischen der Neudefinition einer Ausgabestruktur (Maske) und der Einsetzung von "Deltadaten" in diese Maske unterschieden werden. Bei der Definition einer Ausgabestruktur wird durch die geänderten Daten die Feldeinteilung geändert, andernfalls lediglich der Feldinhalt.

Die Meldungen im virtuellen Terminalprotokoll sind ebenso wie die Meldungen im virtuellen Applikationsprotokoll bevorzugt derart aufgebaut, daß auf ein System-Datenkopfteil mit einer definierten Reihenfolge von Meldungsursprungs- und Meldungszieladressen ein betriebstechnikspezifischer Datenkopfteil mit einer für die beiden Protokolle unterschiedlichen Protokollidentifizierungsinformation, einer Bezeichnung einer Auftragssession, zu der die jeweilige Meldung gehört, und einer das für die Abarbeitung der Auftragssession notwendige Applikation-Programmodul bezeichnenden Zieladresse folgt.

Über das virtuelle Applikationsprotokoll werden insbesondere die Daten zwischen dem Textprozessor-Programmodul und den Applikations-Programmodulen ausgetauscht. Die in diesem Protokoll übertragenen Daten sind bereits nach der Syntax überprüft und komprimiert. Die angegebenen Parameter werden dichtliegend eingetragen, damit bei der Übertragung zu einem jeweils anderen Programmodul nicht das gesamte Protokoll weitergegeben werden muß; die im virtuellen Applikationsprotokoll übertragenen Informationen haben also einen geringeren Umfang als die im virtuellen Terminalprotokoll übergebenen Daten, da bei diesen alle Steuerzeichen enthalten sind. Sofern das Textprozessor-Programmodul in ein Betriebstechnik-Endgerät eingefügt ist, in dem den einzelnen Applikationen immanente Datentabellen gespeichert werden können, die durch ein funktionell wie das Koordinierung-Programmodul strukturiertes Systemprogramm des Betriebstechnik-Endgerätes in die Abarbeitung betriebstechnischer Aufträge eingezogen werden, besteht die Möglichkeit, zu solchermaßen ausgestatteten Endgeräten mit einem durch die besonderen Eigenschaften des virtuellen Applikationsprotokolls bedingten verhältnismäßig geringen Informationsumfang auszukommen. Dadurch wird das Betriebssystem und die Transportsteuerung der Software-Busstruktur sowie die Speicherkapazität des Kommunikationssystems entlastet.

Für das Textprozessor-Programmodul gilt, daß es auch beim Vorsehen einer entsprechenden Fähigkeit der Protokollkonvertierung in einem Betriebstechnik-Endgerät in die betriebstechnische Applikation-Taskstruktur eingefügt sein kann. Das Textprozessor-Programmodul ist somit im weiteren Sinne auch als Applikation-Programmodul aufzufassen, das zur Umsetzung von Kommandoinformationen - z. B. nach CCITT Man-Machine-Language - in applikationsgerechte Dateninformationen dient. Das Textprozessor-Programmodul liefert außerdem die zur Benutzerdialogführung benötigten logischen Steuerkriterien, wobei für die Benutzerdialogführung sowohl 'Line'- als auch maskenorientierte Verfahren verwendet werden. Weitere - teilweise bereits erwähnte - Teilaufgaben des Textprozessor-Programmoduls sind die Syntaxüberprüfung, die Analyse von Kommandos entsprechend Parameterbaumdefinitionen - Parsing - die Durchführung von Parametereinzelprüfungen gegen applikationsbezogene Datentabellen und die Aufbereitung von Ausgabetexten.

Über das Koordinierung-Programmodul werden alle betriebstechnischen Zugriffe auf das Kommunikationssystem gesteuert, wobei der betriebstechnische Ablauf bevorzugt sessionorientiert erfolgt, um den exklusiven Gebrauch der datentechnischen Verbindungen für den Benutzer zu gewährleisten. Vom Koordinierung-Programmodul wird demgemäß jeweils der Aufbau, die zeitliche Überwachung und das Beenden einer Session gesteuert. Im Zusammenhang damit verwaltet das Koordinierung-Programmodul interne Speicherresourcen für die jeweilige Session.

Dem Koordinierung-Programmodul kann insofern eine zentrale Position innerhalb der Steuerungsabläufe des betriebstechnischen Informations- und Datenflusses zugewiesen werden, als es derart strukturiert ist, daß es in Abhängigkeit von der Art der innerhalb eines betriebstechnischen Auftrages angesprochenen Applikationen die Ansteuerung der entsprechenden Applikation-Programmodule einleitet.

Weitere vom Koordinierung-Programmodul gesteuerte Vorgänge sind freilaufende Datenausgaben ohne Reservierung eines Ausgabe-Endgerätes, zusammenhängende Datenausgaben mit absoluter oder bedingter Reservierung eines Ausgabe-Endgerätes und priorisierte Datenausgaben ggf. mit der Möglichkeit der Unterbrechung einer bedingten Reservierung bei Auftreten einer priorisierten Datenausgabe.

Das Koordinierung-Programmodul kann bei Vorliegen von Daten, insbesondere Applikationstabellen in peripheren Dateien, dadurch ergänzt bzw. unterstützt werden, daß in die betriebstechnische Koordinierung-Taskstruktur ein einem Dateiverwaltung-Taskorganisationsprogramm hierarchisch untergeordnetes Dateiverwaltung-Programmodul zur Steuerung des Zugangs zu peripheren Dateien eingefügt ist. Auch für solche Fälle wird die grundsätzliche Organisations- und Steuerstruktur des erfindungsgemäßen Kommunikationssystems dadurch beibehalten, daß in die Leitungstechnik-Taskstruktur ein Speicher-Programmodul zur Steuerung von Such-, Lese- und Schreibaufträgen für die Dateien aufnehmende Speicher eingefügt ist.

Für die Ansteuerung der unterschiedlichen Applikation-Programmmodule kann in die Applikation-Taskstruktur ein Applikationsverbindung-Programmodul zum Aufbau und zur Verwaltung der Verbindung des Koordinierung-Programmoduls mit einem der Applikation-Programmodule eingefügt sein. In das Applikationsverbindung-Programmodul ist dann vorzugsweise die Prüfung auf das Vorhandensein bestimmter angesprochener Applikation-Programmmodule in der Applikation-Taskstruktur und ggf. das Einladen solcher Applikationstabellen aus peripheren Dateien in die Applikation-Taskstruktur unter Einbeziehung des Dateiverwaltung-Programmoduls und des Speicher-Programmoduls verlagert.

Das Zusammenwirken des Koordinierung-Programmoduls und des Applikationsverbindung-Programmoduls erfolgt dabei bevorzugt derart, daß die von einem Betriebstechnik-Endgerät eingegebenen und von einem zugehörigen Betriebstechnik-Geräteprogrammodul aufbereiteten Daten vom Koordinierung-Programmodul an das Textprozessor-Programmodul zur Prüfung übergeben werden, welches Applikation-Programmodul zur weiteren Bearbeitung benötigt wird; eine vom Ergebnis dieser Prüfung abhängige Meldung wird dann an das Applikationsverbindung-Programmodul abgegeben, das eine Verbindung des Koordinierung-Programmoduls mit dem benötigten Applikation-Programmodul aufbaut, über die das Koordinierung-Programmodul die vom Textprozessor-Programmodul konvertierten Auftragsdaten im virtuellen Applikationsprotokoll an das Applikation-Programmmodul abgibt, das nach Abarbeitung der applikationsspezifischen Prozeduren das Prozedurenresultat wiederum im virtuellen Applikationsprotokoll an das Koordinierung-Programmodul übergibt.

Die in die betriebstechnische Applikation-Taskstruktur eingefügten Applikation-Programmodule sind Systemkomponenten zur Durchführung der Einzelaufgaben für die Inbetriebnahme, Wartung und Verwaltung des Kommunikationssystems sowie für die Zusammenstellung von Systemstatusdaten für die Datenausgabe und die Anlagenbetreuung. Jedes Applikation-Programmodul hat einen definierten Funktionsumfang, wobei die Definition der einzelnen Applikation-Programmodule so erfolgt, daß durch aufeinanderfolgendes Aufrufen der einzelnen Applikation-Programmodule eine große Vielfalt unterschiedlicher komplexer betriebstechnischer Aufträge bearbeitet werden kann. Grundsätzlich können die Applikation-Programmodule in vier verschiedene Applikationskategorien eingeteilt werden:

### 1. Standardapplikationen

Dies sind Applikationen, die sich auf die Datenbasis des Kommunikationssystems beziehen. Mit Hilfe solcher Applikationen können beispielsweise anlagenspezifische Daten, wie Berechtigungen oder Numerierungsplan, eingerichtet bzw. geändert werden. Der Zugriff auf die Datenbasis erfolgt dabei über die definierten Datenbasis-Zugriffsroutinen.

### 2. Systemapplikationen

Die Basis für diese Applikationen sind die betriebstechnischen sessionorientierten Daten; mit Hilfe dieser Applikationen können beispielsweise Masken für bestimmte Ausgabeformate festgelegt werden oder eine Speicherung von aktiven betriebstechnischen Hintergrundprozeduren bzw. ein Aufruf oder eine Unterbrechung derselben erfolgen.

### 3. Hintergrundapplikationen

Solche Hintergrundapplikationen dienen beispielsweise der Aufnahme von Daten eines laufenden betriebstechnischen Auftrages, um beispielsweise ein Betriebstechnik-Endgerät für weitere Eingaben freizugeben, noch ehe der laufende betriebstechnische Vorgang völlig beendet ist.

### 4. Permanente Applikationen

Mit diesen Applikationen, die bevorzugt als eigenständige Task organisiert sind, können beispielsweise selbständige Ausgabeaktivitäten - z. B. Alarmausgaben an Alarmfeldern - ohne Mitwirken des Koordinierung-Programmoduls durchgeführt werden.

Ein wesentlicher Aspekt der Sicherheitstechnik des Kommunikationssystems ist die Initialisierung des Gesamtsystems. Gemäß einer vorteilhaften Ausgestaltung der Erfindung wird dieser Teilaspekt dadurch realisiert, daß in die betriebs- und sicherheitstechnische Applikation-Taskstruktur ein Systeminitialisierung-Programmodul eingefügt ist, das dem Multitasking-Betriebssystem derart zugeordnet ist, daß vom Systeminitialisierung-Programmodul im Multitasking-Betriebssystem die Initialisierung einer Hochlauftask angeregt wird, die die Initialisierung der Programmodule aller drei Taskstrukturebenen koordiniert. Der Systemhochlauf ist somit dem Betriebssystem und dessen Anwender-Tasken übergeordnet.

Die Hochlauftask des Multitasking-Betriebssystems koordiniert das Starten der Hochlaufphase der weiteren Tasken, wobei die Programmodule der Taskstrukturen bevorzugt derart strukturiert sind, daß sie die Initialisierung der ihnen jeweils zugeordneten Daten und Hardware-Systemkomponenten steuern. Die Initialisierung der Systemkomponenten, die nicht eindeutig einem der Programmodule der Taskstrukturen zugeordnet sind, werden dagegen mittels des Systeminitialisierung-Programmoduls durchgeführt.

Daten, die mehr als einer Task bzw. mehr als einem Programmodul zugeordnet sind, sind im allgemeinen Daten der Datenbasis; für diese Daten werden neben den Datenbasis-Zugriffsroutinen auch Initialisierungsroutinen zur Verfügung gestellt, die durch eine Datenbasis-Task aufgerufen werden können.

Ein weiterer wesentlicher Teilaspekt der Sicherheitstechnik des erfindungsgemäßen Kommunikationssystems ist die - im allgemeinen als 'recovery' bezeichnete - Systemzustandswiederherstellung, die auch Festlegungen der Art und des Umfang von Fehleralarmanzeigen umfaßt. Diesem 'recovery'-Aspekt dient eine weitere Ausgestaltung der Erfindung, gemäß der ein Systemzustandswiederherstellung-Programmodul über eine Datentabelle gesteuert ist, die mittels wenigstens eines betriebstechnischen Applikation-Programmoduls konfigurierbar ist und in der Informationen über die in den einzelnen Fehlerfällen einzuleitenden Systemzustandswiederherstellungsmaßnahmen einschließlich der Art und des Umfangs von Fehleralarmanzeigen enthalten sind. Solche Aussagen betreffen z. B.:
- ob und wie die Fehlersignalisierung erfolgen soll
- ob der Fehler in einem entsprechenden Fehlerspeicher aufzunehmen ist
- ob die Alarmanzeige eine besondere Priorität enthält
- ob eine zusätzliche akkustische Signalisierung erfolgen soll.

Es kann zwischen unterschiedlich gewichtigen 'recovery'-Maßnahmen unterschieden werden: So kann z. B. lediglich ein Fehler angezeigt werden, die Fehlerbehebung dagegen dem Anwender überlassen werden. Es ist aber auch denkbar, beim Auftreten bestimmter Fehler das betroffene Programmodul oder die betroffene Hardware-Baugruppe, in der der Fehler aufgetreten ist, außer Betrieb zu nehmen. Weitere Möglichkeiten nach Beheben eines Fehlers sind der sogenannte 'soft restart', bei dem die Anlage reinitialisiert wird, indem bestehende Zweierverbindungen durchgeschaltet bleiben und der sogenannte 'hard restart', bei dem auch durchgeschaltete Verbindungen abgebaut und alle Leistungsmerkmale rückgesetzt werden.

Ein gemäß einer weiteren vorteilhaften Ausgestaltung der Erfindung in die betriebs- und sicherheitstechnische Applikation-Taskstruktur eingefügtes Inbetriebnahme-Programmodul dient der In- und Außerbetriebnahme von Leitungen und Baugruppen des Kommunikationssystems, wobei dieses Programmodul aus betriebstechnischen Abläufen heraus aufrufbar ist. Darüberhinaus kann das Inbetriebnahme-Programmodul aber auch als 'recovery'-Maßnahme über Leitungskriterien, beim Sperren und Entsperren von Baugruppen oder beim Reservieren von Hardware-Systemkomponenten für Prüfzwecke aufgerufen werden.

Neben der Verknüpfung sicherheitstechnischer Funktionen mit vermittlungstechnischen Abläufen und betriebstechnischen Abläufen können auch Verknüpfungen zwischen betriebstechnischen und vermittlungstechnischen Funktionen auftreten. Diesem Aspekt ist eine weitere Ausgestaltung der Erfindung zugeordnet, gemäß der in die betriebs- und sicherheitstechnische Applikation-Taskstruktur ein Verkehrsdatenerfassung-Programmodul zur Erfassung teilnehmer- bzw. kommunikationsdienstbezogener Verbindungsinformationen eingefügt ist, dem Verbindungsinformationen von wenigstens einem der in die Koordinierung-Taskstruktur eingefügten Vermittlungsprozedur-Programmodule nach definierten Vermittlungsprozedur-Abschnitten in Form von Meldungen des vermittlungstechnikspezifischen Meldungsprotokolls übergeben werden. Die Übergabe kann dabei so erfolgen, daß in einem betriebstechnischen Aufgaben zugeordneten Teilmodul des Vermittlungsprozedur-Programmoduls die entsprechenden Verbindungsinformationen erfaßt und über die Software-Busstruktur weitergegeben werden.

Ein weiteres Beispiel für die Verknüpfung betriebstechnischer und vermittlungstechnischer Funktionsabläufe ist die Gebührenerfassung und -auswertung.

Die Erfindung wird im folgenden anhand eines in fünf Figuren dargestellten Ausführungsbeispiels erläutert.

Dabei zeigen:
- Fig. 1: Organisations- und Steuerstruktur für den vermittlungstechnischen, betriebstechnischen und sicherheitstechnischen Informations- und Datenfluß eines digitalen Kommunikationssystems,
- Fig. 2: Struktur eines Geräteprogrammoduls der Leitungstechnik-Taskstrukturebene,
- Fig. 3: Struktur eines Programmoduls der Betriebstechnik- und Vermittlungstechnik-Koordinierung-Taskstrukturebene,
- Fig. 4: eine in der Fig. 1 enthaltene Leitungstechnik-Task mit Geräteprogrammodulen für die Anpassung an unterschiedliche Arten von Endgeräten in detaillierter Darstellung innerhalb des Systemumfeldes und
- Fig. 5: Organisationsstruktur eines Vermittlungsprozedur-Programmoduls, eingebettet in das Systemumfeld.

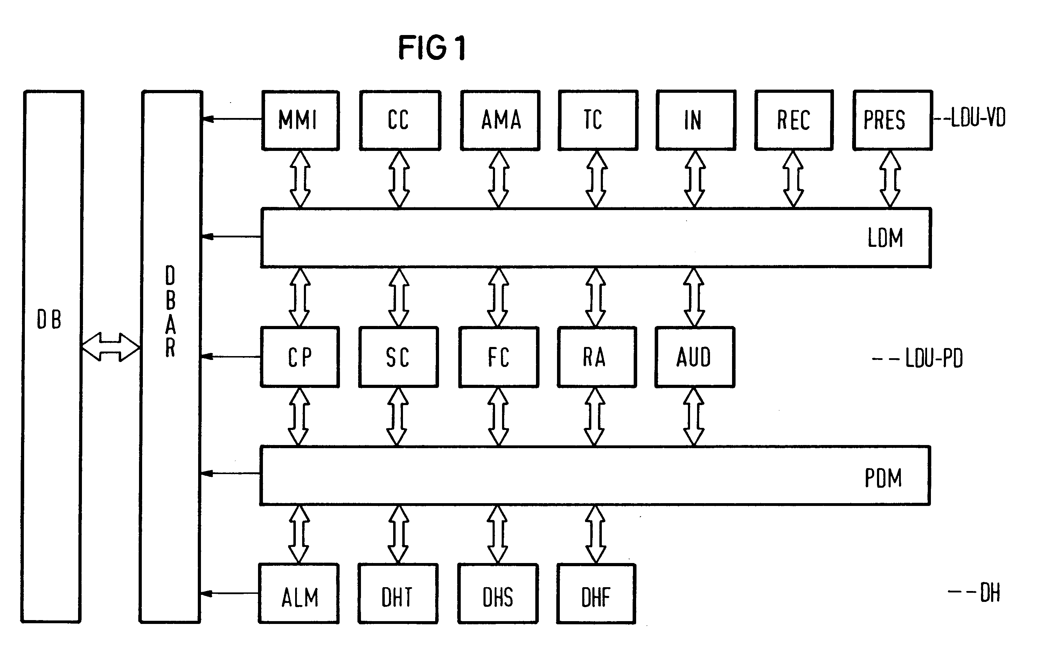

Die in der Fig. 1 dargestellte Organisations- und Steuerstruktur für den vermittlungstechnischen, betriebstechnischen und sicherheitstechnischen Daten- und Informationsfluß innerhalb eines modular strukturierten Kommunikationssystems weist drei Steuerebenen mit je einer Taskstruktur DH, LDU PD, LDU VD auf, zwischen denen Meldungen über eine Programm-Busstruktur PDM, LDM ausgetauscht werden. In der peripherienahen Leitungstechnik-Taskstruktur DH sind drei jeweils endgeräteartenspezifische Geräteprogrammodule ALM, DHT, DHS, DHF angeordnet, von denen das eine (DHT) einem betriebstechnischen Terminal, das zweite (DHS) einem digitalen Fernspechendgerät, das dritte (DHF) einem peripheren Speicher und das vierte (ALM) einem Alarmmonitor zugeordnet ist. Der Austausch von Meldungen zwischen den Geräteprogrammodulen ALM, DHT, DHS, DHF und der nachgeordneten Betriebstechnik- und Vermittlungstechnik-Koordinierung-Taskstruktur LDU PD erfolgt bezüglich der betriebstechnischen Meldungen in einem definierten Übertragungsprotokoll - virtuellen Terminalprotokoll - und bezüglich der vermittlungstechnischen Meldungen in einem spezifisch vermittlungstechnischen Protokoll über einen Programmbus PDM der Programm-Busstruktur PDM, LDM. Die betriebstechnische Koordinierung-Taskstruktur - repräsentiert durch ein Koordinierung-Programmodul SC und ein Dateiverwaltung-Programmodul FC - ist der vermittlungstechnischen Koordinierung-Taskstruktur - durch ein Vermittlungstechnik-Programmodul CP repräsentiert - und einer sicherheitstechnischen Koordinierung-Taskstruktur - repräsentiert durch ein Alarmmeldung-Programmodul RA und ein Prüf- und Auswerte-Programmodul AUD - hierarchisch gleichgestellt.

Funktionell wesentlichster Bestandteil der betriebstechnischen Koordinierung-Taskstruktur ist das Koordinierung-Programmodul SC, über das im wesentlichen der Daten- und Informationsfluß verläuft und gesteuert wird. Das Dateiverwaltung-Programmodul FC dient der Steuerung des Zugangs von Programmodulen der betriebstechnischen Applikation-Taskstruktur LDU VD zu peripheren Dateien.

Das der sicherheitstechnischen Koordinierung-Taskstruktur angehörende Prüf- und Auswerte-Programmodul AUD steht stellvertretend für eine im allgemeinen größere Anzahl solcher Programmodule, die alle nicht zeitkritischen Funktionen der Sicherheitstechnik steuern. Beim Vorhandensein mehrerer solcher Prüf- und Auswerte-Programmodule AUD werden diese bevorzugt gemeinsam in einer Task zusammengefaßt. Das Alarmmeldung-Programmodul RA dient der Störungsmeldung an nicht unmittelbar an das Kommunikationssystem über Leitungen angeschlossene Terminals oder Unteranlagen.

Das die vermittlungstechnische Koordinierung-Taskstruktur repräsentierende Vermittlungsprozedur-Programmodul CP enthält neben strikt auf vermittlungstechnische Aufgaben bezogenen Teilmodulen wenigstens ein betriebstechnisches Teilmodul und ein sicherheitstechnisches Teilmodul, über das entsprechende betriebstechnische und sicherheitstechnische Meldungen an andere, der Betriebstechnik oder Sicherheitstechnik zugeordnete Programmodule abgegeben werden.

Innerhalb der betriebs- und sicherheitstechnischen Appikation-Taskstruktur LDU VD ist die betriebstechnische Applikation-Taskstruktur durch ein Applikation-Programmodul AMA, ein Applikationsverbindung-Programmodul CC, ein Textprozessor-Programmmodul MMI und ein Verkehrsdatenerfassung-Programmodul TC repräsentiert.

Das Applikation-Programmodul AMA repräsentiert eine im allgemeinen größere Anzahl von Applikation-Programmodulen zur Abwicklung von betriebstechnischen Aufgaben im Zusammenhang mit der Wartung und der Verwaltung des digitalen Kommunikationssystems. Im weiteren Sinne kann auch das Verkehrsdatenerfassung-Programmodul TC als Applikation-Programmodul interpretiert werden; dieses Programmodul TC dient zur Erfassung teilnehmer-bzw. kommunikationsdienstbezogener Verbindungsinformationen, wobei die notwendigen Verbindungsinformationen vom Vermittlungsprozedur-Programmodul CP in Form von Meldungen eines vermittlungstechnikspezifischen Meldungsprotokolls über den Programmbus LDM der Programm-Busstruktur PDM, LDM übergeben werden.

Das Applikationsverbindung-Programmodul CC dient zum Aufbau und zur Verwaltung der Verbindung des Koordinierung-Programmoduls SC mit einem der Applikation-Programmodule AMA. Darüberhinaus ist das Applikationsverbindung-Programmodul CC auch an der Nachladung von Daten aus peripheren Speichern über das Dateiverwaltung-Programmodul FC beteiligt.

Das Textprozessor-Programmodul MMI, das die zur Benutzerdialogführung benötigten Steuerkriterien liefert, hat als wesentliche Aufgabe die Konvertierung von Meldungen im virtuellen Terminalprotokoll in Meldungen eines virtuellen Applikationsprotokolls und umgekehrt. Während das virtuelle Terminalprotokoll für Meldungen zwischen der Leitungstechnik-Taskstruktur DH und der Betriebstechnik- und Vermittlungstechnik-Koordinierung-Taskstruktur LDU PD sowie für Meldungen vom Koordinierung-Programmodul SC zum Textprozessor-Programmodul MMI benutzt wird, werden alle Meldungen - mit Ausnahme von vom virtuellen Applikationsprotokoll in das virtuelle Terminalprotokoll konvertierten Meldungen - vom Textprozessor-Programmodul MMI an das Koordinierung-Programmodul SC im virtuellen Applikationsprotokoll übertragen, das sich gegenüber dem virtuellen Terminalprotokoll durch eine verdichtete Datenfolge und damit geringere Länge auszeichnet.

Der sicherheitstechnische Teil der betriebstechnischen und sicherheitstechnischen Applikation-Taskstruktur LDU VD wird durch ein Systeminitialisierung-Programmodul IN, ein Systemzustandswiederherstellung-Programmodul REC und ein Inbetriebnahme-Programmodul PRES repräsentiert.

Mittels des Systeminitialisierung-Programmoduls IN wird im Multitasking-Betriebssystem des Kommunikationssystems die Initialisierung einer Hochlauftask angeregt, die die Initialisierung der Programmodule aller drei Taskstrukturebenen koordiniert. Während mittels der Hochlauftask eine Eigeninitialisierung aller Programmodule gestartet wird, erfolgt die Initialisierung der Systemkomponenten, die nicht eindeutig einem der Programmodule der unterschiedlichen Taskstrukturen zugeordnet sind, mittels des Systeminitialisierung-Programmoduls IN.

Das Systemzustandswiederherstellung-Programmodul REC (recovery) wird über eine Datentabelle gesteuert, die mittels betriebstechnischer Meldungen konfigurierbar ist und in der die Informationen über die in den einzelnen Fehlerfällen einzuleitenden Systemzustandswiederherstellungsmaßnahmen enthalten sind.

Das Inbetriebnahme-Programmodul PRES dient der In- und Außerbetriebnahme von Leitungen und Baugruppen des Kommunikationssystems, wobei das Inbetriebnahme-Programmodul PRES aus betriebstechnischen Abläufen heraus aufrufbar ist.

Zumindest ein großer Teil der Programmodule in allen drei Taskstrukturen DH, LDU PD, LDU VD hat über definierte Datenbasis-Zugriffsroutinen DBAR Zugriff auf eine Datenbasis DB des Kommunikationssystems. Der Zugang der einzelnen Programmodule während des Ablaufs betriebstechnischer Vorgänge erfolgt in einer Transportebene eines Multitasking-Betriebssystems eines zentralen Kommunikationsrechners, der durch eine Mehrprozessorkonfiguration realisiert ist.

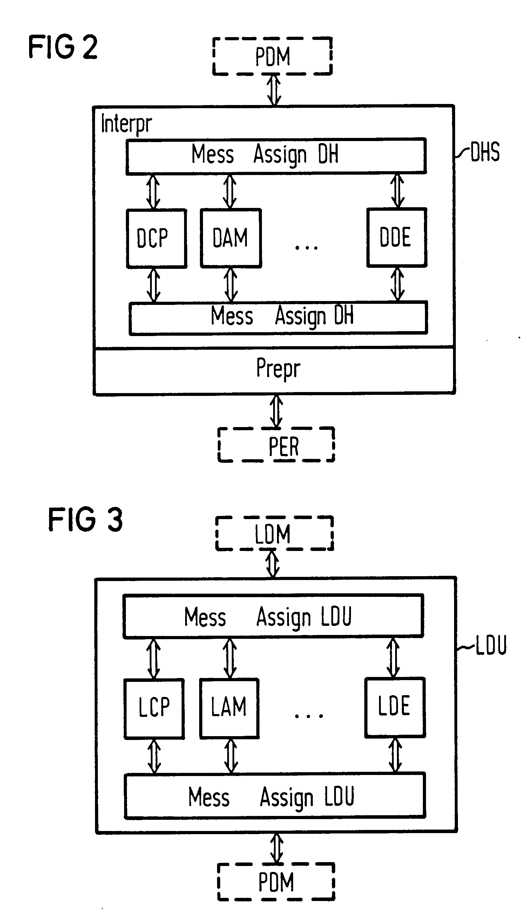

In der Fig. 2 ist die prinzipielle Organisations- und Steuerstruktur eines einer Fernsprech-Endgeräteart zugeordneten Leitungstechnik-Programmoduls DHS dargestellt. Im wesentlichen umfaßt diese Organisations- und Steuerstruktur eine Bewertungs-Programmebene Interpr und eine Vorverarbeitungs-Programmebene Prepr. In der Vorverarbeitungs-Programmebene Prepr werden von der Peripherie PER stammende Anreize nach individuellen Leitungskriterien bewertet und in einer entsprechend aufbereiteten Form an die Bewertungs-Programmebene Interpr abgegeben. Darüberhinaus dient die Vorverarbeitungs-Programmebene Prepr zur Umsetzung logischer Meldungen, die über den Softwarebus PDM an das Leitungstechnik-Programmodul DHS übertragen werden, in Einstelldaten für die in der Peripherie PER befindlichen Fernsprech-Endgeräte. Die an das Leitungstechnik-Programmodul DHS übergebenen Meldungen können dabei auch vor einer Bearbeitung in der Vorverarbeitungs-Programmebene Prepr in der Bewertungs-Programmebene Interpr zusätzlich bewertet und umgesetzt werden. Im wesentlichen dient die Bewertungs-Programmebene Interpr jedoch der Umsetzung der von der Peripherie PER abgegebenen Anreize - teilweise nach vorheriger Behandlung in der Vorverarbeitungs-Programmebene Prepr - in logische Meldungen, wobei die Bildung dieser logischen Meldungen mittels systemspezifischer Parameter erfolgt, die zumindest zum Teil in der Datenbasis des Kommunikationssystems niedergelegt sind.

Die Bewertungs-Programmebene Interpr weist Teilprogrammodule DCP, DAM, DDE auf, die jeweils definierten Teilfunktionen der vom Leitungstechnik-Programmodul DHS durchführbaren Gesamtfunktionen zugeordnet sind. Im vorliegenden Beispiel ist das Teilprogrammodul DCP vermittlungstechnischen Funktionen in der Steuerung des Signalisierungsverfahrens und der Benutzeroberfläche der Endgeräte der Peripherie PER zugeordnet, während das Teilprogrammodul DAM für den betriebstechnischen Informations-und Datenfluß und das Teilmodul DDE für den sicherheitstechnischen Informations- und Datenfluß der Endgeräteart vorgesehen ist, dem das Leitungstechnik-Geräteprogrammodul DHS zugeordnet ist.

Die Zuweisung der Anreize bzw. Meldungen vom Softwarebus PDM bzw. von der Peripherie PER an die einzelnen Teilprogrammodule DCP, DAM, DDE erfolgt mittels eines entsprechend ausgestalteten Zuordnungsprogramms Mess Assign DH (Message Assignment) in der Bewertungs-Programmebene Interpr.

Die in Fig. 3 dargestellte prinzipielle Organisations- und Steuerstruktur eines Vermittlungsprozedur-Programmoduls LDU ähnelt insofern der in der Fig. 2 dargestellten Struktur eines Leitungstechnik-Programmoduls, als ebenfalls Teilmodule LCP, LAM, LDE und ein Zuordnungsprogramm Mess Assign LDU vorgesehen sind. Die Vermittlungsprozedur-Teilprogrammodule LCP, LAM, LDE dienen wiederum vermittlungstechnischen, betriebstechnischen bzw. sicherheitstechnischen Aufgaben, wobei jeweils mittels des Zuordnungsprogramms Mess Assign LDU auf das benötigte Vermittlungsprozedur-Teilprogrammodul LCP, LAM, LDE verzweigt wird. Über die Software-Busstruktur LDM, PDM werden Meldungen von der betriebs- und sicherheitstechnischen Applikation-Taskstrukturebene oder von der Leitungstechnik-Strukturebene aufgenommen bzw. an diese abgegeben.

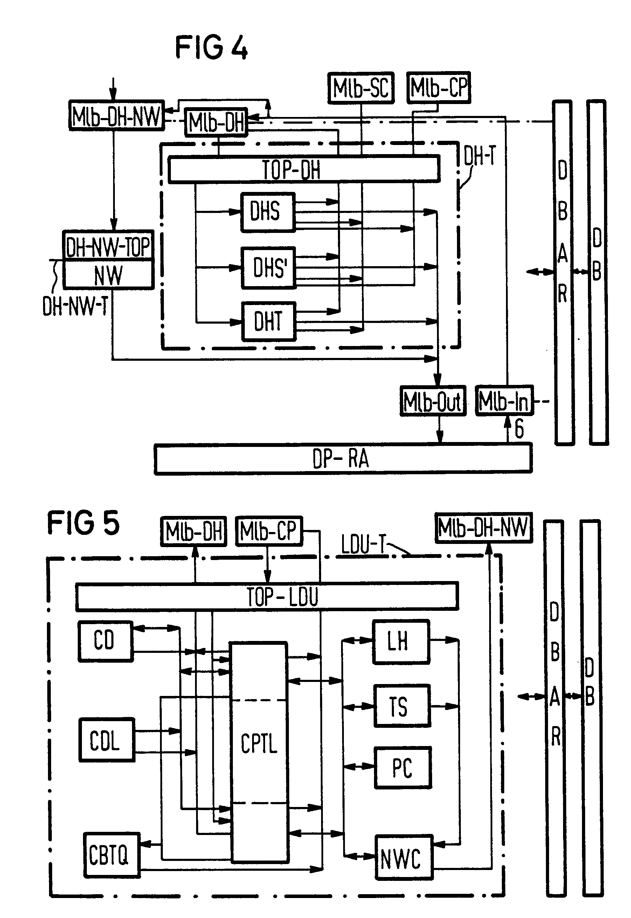

Die Fig. 4 zeigt die Leitungstechnik-Strukturebene in ihrer Systemumgebung in detaillierter Darstellung. Die Leitungstechnik-Strukturebene wird im wesentlichen durch eine Leitungstechnik-Task DH-T gebildet, in der Geräteprogrammodule DHS, DHS′, DHT einem Leitungstechnik-Taskorganisationsprogramm TOP-DH hierarchisch untergeordnet sind. Die Geräteprogrammodule DHS, DHS′, dienen dabei der Steuerung des Signalisierungsverfahrens und der Benutzeroberfläche unterschiedlicher Endgerätearten und weisen zugehörige betriebstechnische und sicherheitstechnische Komponenten auf. Das Geräteprogrammodul DHT entspricht dem Geräteprogrammodul DHT der Fig. 1 und dient der Anpassung des betriebstechnischen Daten- und Informationsflusses an ein Betriebstechnik-Terminal.

Die Übermittlung von Anreizen an die Leitungstechnik-Task DH-T bzw. von Einstelldaten an die Peripherie PER erfolgt über mailboxartig betriebene Übergabespeicher Mlb-In, Mlb-Out, die als integraler Bestandteil der Transportebene des Multitasking-Betriebssystems für Anreize und Einstelldaten aufzufassen sind. Die Transportebene ist ergänzt durch einen mailboxartig betriebenen Eingabe- und Ausgabespeicher Mlb-DH, über den von der Leitungstechnik-Task DH-T Anreize vom Übergabespeicher Mlb-In und von der nicht dargestellten Betriebstechnik- und Vermittlungstechnik-Koordinierung-Strukturebene aufgenommen werden. Die von der Leitungstechnik-Task DH-T erzeugten und für die Vermittlungstechnik-Koordinierung-Strukturebene bestimmten Meldungen werden an einen Eingabe- und Ausgabespeicher Mlb-CP, der einer Task mit dem Vermittlungsprozedur-Programmodul CP (Fig. 1) zugeordnet ist, und die für die Betriebstechnik-Koordinierung-Strukturebene bestimmten Meldungen an einen Eingabe- und Ausgabespeicher Mlb-SC, der einer Task mit dem Koordinierung-Programmmodul SC (Fig. 1) zugeordnet ist, abgegeben.

Die mailboxartig betriebenen Übergabespeicher Mlb-In, Mlb-Out, die in Richtung auf die Peripherie PER des Kommunikationssystems mit einem Speicher DP-RAM eines Eingabe-/Ausgabeprozessors zusammenarbeiten, stellen außerdem den Eingang bzw. den Ausgang einer Koppelfeld-Task DH-NW-T dar, die ein Koppelfeld-Geräteprogrammodul NW aufweist, das einem Koppelfeld-Taskorganisationsprogramm DH-NW-TOP hierarchisch untergeordnet ist. Anreize bzw. Einstellinformationen von der Peripherie PER werden vom Übergabespeicher Mlb-In an einen mailboxartig betriebenen Eingabe- und Ausgabespeicher Mlb-DH-NW abgegeben, der darüberhinaus auch Meldungen von der Betriebstechnik- und Vermittlungstechnik-Koordinierung-Taskstrukturebene aufnimmt.

Das Koppelfeld-Geräteprogrammodul NW sowie die Geräteprogrammodule DHS, DHS′, DHT haben über die Datenbasis-Zugriffsroutinen DBAR Zugriff zur Datenbasis DB des Kommunikationssystems.

Die in der Fig. 5 dargestellte Vermittlungstechnik-Struktur weist prinzipielle Ähnlichkeit mit der in Fig. 4 dargestellten Leitungstechnik-Strukturebene auf. Eine Vermittlungstechnik-Task LDU-T weist ein Vermittlungstechnik-Taskorganisationsprogramm TOP-LDU auf, dem mehrere Vermittlungsprozedur-Programmodule hierarchisch untergeordnet sind. Die Verbindung der Vermittlungstechnik-Task LDU-T mit der Systemumgebung erfolgt bezüglich der Datenbasis DB wiederum über die Datenbasis-Zugriffsroutinen DBAR und bezüglich der Leitungstechnik-Strukturebene mittels der Eingabe- und Ausgabespeicher Mlb-DH bzw. Mlb-DH-NW in abgehender Richtung und in ankommender Richtung über den unmittelbar der Vermittlungstechnik-Task LDU-T zugeordneten Eingabe- und Ausgabespeicher Mlb-CP.

Die Vermittlungsprozedur-Programmodule sind derart strukturiert, daß ein Verbindungssteuerung-Programmodul CPTL (Call Processing Trunk Line), in dem durch gestrichelte Unterteilung zwei Teilmodule für Trunk- bzw. Linesteuerung angedeutet sind, und weitere sieben Leistungsmerkmal-Programmodule für die Aktivierung und Deaktivierung von entsprechenden leistungsmerkmaltypischen Steuerprozeduren gebildet sind. Die Funktion der Leistungsmerkmal-Programmodule wird im folgenden erläutert:

### Leistungsmerkmal-Programmodul CD (Call Distribution):

Dieses Programmodul wird von dem Verbindungssteuerung-Programmmodul CPTL aufgerufen, wenn von einem Teilnehmer eine einen Vermittlungsplatz bezeichnende Kennzahl gewählt wurde, ein Anruf zum Vermittlungsplatz umgeleitet wird, oder wenn ein Endgerät gerufen wird, für das ein Auftrag zur Umleitung ankommender Gespräche zu einem Vermittlungsplatz in der Datenbasis eingetragen ist. Die zu rufende Stelle wird jeweils aufgrund des aktuellen Zustands der Anlage ermittelt; bei Änderungen des Zustands der Anlage, z. B. beim Übergang von üblichem Verkehr zur Nachtschaltung wird die Signalisierung bei der gerufenen Stelle automatisch angepaßt, wovon die rufende Stelle nicht betroffen ist.

### Leistungsmerkmal-Programmodul CDL (Call Dispatching Line):

Auch dieses Leistungsmerkmal-Programmodul CDL wird durch das Verbindungssteuerung-Programmodul aufgerufen; dies erfolgt, wenn ein Verbindungswunsch zu einem bestimmten Teilnehmer vorliegt, dieser Wunsch aber auch bei anderen Teilnehmern signalisiert werden muß, z. B. für Makler-Reihenanlagen-Teilnehmer. Das Leistungsmerkmal-Programmodul CDL ermittelt die zu rufenden Sprechstellen.

### Leistungsmerkmal-Programmodul CBTQ (Call Back And Trunk Queuing):

In diesem Leistungsmerkmal-Programmodul CBTQ wird das Ein- und Austragen sowie die Ausführung von Rückruf- und Anrufwarteschlangen-Aufträge realisiert.

### Leistungsmerkmal-Programmodul LH (Line Hunting):

Mit diesem Leistungsmerkmal-Programmodul LH wird das Ein- bzw. Austragen und die Ausführung von Anrufen an einen oder mehrere Sammelanschlüsse realisiert.

### Leistungsmerkmal-Programmodul PC (Paging Controller):

Auch dieses Leistungsmerkmal-Programmodul wird vom Verbindungssteuerung-Programmodul CPTL aufgerufen, wenn entweder eine entsprechende Kennzahl gewählt wurde oder ein Anruf auf das Personensuchsystem umgeleitet wurde. Das Leistungsmerkmal-Programmmodul PC verwaltet autonom die Suchwünsche, auch wenn der Auftraggeber bereits wieder aufgelegt hat. Wenn mehrere Wünsche simultan anstehen, kann die Suchsignalisierung synchronisiert werden. Es werden Meldewünsche entgegengenommen und der Verbindungsaufbau zwischen einem suchenden und einem meldenden Endgerät unterstützt.

### Leistungsmerkmal-Programmodul TS (Trunk Searcher):

Das Programmodul TS sucht bei Vorliegen bestimmter Indikatoren in den Meldungen einen entsprechenden Leitungssatz. Das Leistungsmerkmal-Programmodul TS liefert dabei für den Verbindungsverkehr die notwendigen Daten für die Ziffernaussendung, wie z. B. einzuhaltende Pausen zwischen Ziffern oder Umschaltung von Impulswahl auf Mehrfrequenz-Code-Wahl.

Zu den Leistungsmerkmal-Programmodulen wird auch das Leistungsmerkmal-Programmodul NWC (Network Controller) gerechnet, mit dem die gesamte logische Verbindungsspeichersteuerung und Koppelfeldsteuerung realisiert wird. Das Leistungsmerkmal-Programmodul NWC reserviert vorgegebene Wege und gibt sie auf Anweisung frei; es ist also für die Verwaltung der Zeitschlitze im Zeitmultiplex-Koppelfeld zuständig.

Das Verbindungssteuerung-Programmodul CPTL und zumindest einige der Leistungsmerkmal-Programmodule CD...TS weisen betriebstechnische und/oder sicherheitstechnische Teilprogrammodule auf, die über die Programm-Busstruktur bzw. weitere - nicht dargestellte - mailboxartig betriebene Übergabespeicher mit weiteren Tasken bzw. Programmodulen der Betriebstechnik-Vermittlungstechnik-Koordinierung-Taskstruktur bzw. der betriebs- und sicherheitstechnischen Applikation-Taskstruktur kommunizieren.

## Patentansprüche

1. Modular strukturiertes digitales Kommunikationssystem zur Verbindung von Endgeräten untereinander und mit insbesondere öffentlichen Netzen
- mit wenigstens einem Betriebstechnik-Endgerät,
- mit wenigstens einem aus systemsicherheitstechnischen Prüfvorgängen gewonnene Alarmmeldungen anzeigenden Alarmanzeigeendgerät und
- mit einem zentralen Systemrechner mit einer Systemdatenbasis (DB) und zumindest einem Multitasking-Betriebssystem
-- zur Verwaltung einer Leitungstechnik-Taskstruktur (DH) mit endgeräteartenspezifischen Geräteprogrammodulen (DHT, DHF, DHS, DHA) zum Generieren logischer Meldungen und/oder Betriebstechnik-Meldungen aus an den Endgeräten und/oder Betriebstechnik-Endgeräten vorgenommenen Eingaben und zur Abgabe von aus logischen Meldungen oder Betriebstechnik-Meldungen oder Alarmmeldungen gewonnenen geräteartspezifischen Einstelldaten für die Endgeräte und/oder Betriebstechnik-Endgeräte oder Alarmanzeigeendgeräte,
-- zur Verwaltung einer Betriebstechnik- und Vermittlungstechnik-Koordinierung-Taskstruktur (LDU PD) mit einem betriebstechnischen Koordinierung-Programmodul (SC) zur Steuerung des betriebstechnischen Informations- und Datenflusses, mit Vermittlungsprozedur-Programmodulen (CP), die endgeräteklassenunabhängig und kommunikationsdiensteunabhängig im Sinne der Bildung logischer Teilprozesse des gesamten Vermittlungsprozesses derart strukturiert sind, daß neben wenigstens einem Verbindungssteuerung-Programmodul (CPTL) für die Steuerung des Aufbaus und Abbaus von Verbindungen weitere Leistungsmerkmal-Programmodule (LH, TS, PC, NC, CD, SCL, SBTQ) für die Aktivierung und Deaktivierung von entsprechenden Steuerprozeduren gebildet sind und mit wenigstens einem sicherheitstechnischen Prüf- und Auswerte-Programmodul (AUD) zur Durchführung nicht zeitkritischer sicherheitstechnischer Prüf- und Auswertevorgänge und
-- zur Verwaltung einer betriebs- und sicherheitstechnischen Applikation-Taskstruktur (LDU VD) mit Applikation-Programmodulen (AMA, REC) zur Abwicklung applikationsorientierter Funktionen, z. B. Inbetriebnahme, Wartung, Fernbetriebstechnik, Systemzustandswiederherstellung (recovery),
--- wobei zumindest einem Teil der Programmodule (DHT...SC...AMA) jeweils individuell über definierte Datenbasiszugriffsroutinen (DBAR) die Datenbasis (DB) zugänglich ist und
--- zur Verbindung der Leitungstechnik-Taskstruktur (DH) mit der Betriebstechnik- und Vermittlungstechnik-Koordinierung-Taskstruktur (LDU PD) bzw. zu deren Verbindung mit der betriebs- und sicherheitstechnischen Applikation-Taskstruktur (LDU VD) eine Programm-Busstruktur (PDM, LDM) mit wenigstens einem kommunikationsdienste- und endgeräteartenunabhängig allgemeingültig festgelegten Übertragungsprotokoll der darüber übermittelten Meldungen vom Multitasking-Betriebssystem gebildet und verwaltet wird.

2. Kommunikationssystem nach Anspruch 1,
**dadurch gekennzeichnet,**
daß die Geräteprogrammodule (DHT, DHF, DHS, DHA) in wenigstens einer Leitungstechnik-Task (DH-T) zusammengefaßt sind, der jeweils ein von einem Leitungstechnik-Taskorganisationsprogramm (TOP-DH) verwalteter, mailboxartig betriebener Eingabe- und Ausgabespeicher (Mlb-DH) zugeordnet ist.

3. Kommunikationssystem nach Anspruch 2,
**dadurch gekennzeichnet,**
daß die Leitungstechnik-Task (DH-T) durch eine Koppelfeld-Task (DH-NW-T) mit einem von einem Koppelfeld-Taskorganisationsprogramm (DH-NW-TOP) verwalteten Koppelfeld-Geräteprogrammodul (DH-NW) ergänzt ist.

4. Kommunikationssystem nach Anspruch 2 oder 3,
**dadurch gekennzeichnet,**
daß ein von einem Eingabe/Ausgabeprozessor (IOP) verwalteter Peripheriespeicher (DP-RAM) jeweils einen jeweils unabhängig voneinander steuerbaren Eingabeanschluß für in der Leitungstechnik-Task (DH-T) und/oder in der Koppelfeld-Task (DH-NW-T) gewonnene Meldungen für die Endgeräte und Ausgabeanschluß für aus Anreizen der Endgeräte gewonnene Meldungen aufweist.

5. Kommunikationssystem nach Anspruch 1,
**dadurch gekennzeichnet,**
daß das Koordinierung-Programmodul (SC) in eine Koordinierung-Task eingefügt ist, der ein von einem Koordinierung-Taskorganisationsprogramm verwalteter, mailboxartig betriebener Eingabe- und Ausgabespeicher zugeordnet ist.

6. Kommunikationssystem nach Anspruch 1,
**dadurch gekennzeichnet,**
daß die Vermittlungsprozedur-Programmodule (CP) in wenigstens eine Vermittlungstechnik-Task (LDU-T) eingefügt ist, der ein von einem Vermittlungstechnik-Taskorganisationsprogramm (TOP-LDU) verwalteter, mailboxartig betriebener Eingabe- und Ausgabespeicher (Mlb-CP) zugeordnet ist.

7. Kommunikationssystem nach Anspruch 1,
**dadurch gekennzeichnet,**
daß die sicherheitstechnischen Prüf- und Auswerte-Programmodule (AUD) in eine Prüf- und Auswertetask eingefügt sind, der ein von einem Prüf- und Auswerte-Taskorganisationsprogramm verwalteter, mailboxartig betriebener Eingabe- und Ausgabespeicher zugeordnet ist.

8. Kommunikationssystem nach den Ansprüchen 1 bis 7,
**dadurch gekennzeichnet,**
daß die Programm-Busstruktur (PDM, LDM) einen logischen Netzknoten für die Interkommunikation der Verbindungssteuerung-Programmodule (CPTL) und zumindest einen Teil der Leistungsmerkmal-Programmodule (LH, TS, PC, NC, CD, CDL, CBTQ) mit einem Teil der Geräteprogrammodule (DHS) über die Ein- und Ausgabespeicher (Mlb-CP, Mlb-DH) der Vermittlungstechnik-Task (LDU-T) und der Leitungstechnik-Task (DH-T) bildet.

9. Kommunikationssystem nach Anspruch 1,
**dadurch gekennzeichnet,**
daß für die Programm-Busstruktur (PDM, LDM) ein kommunikationsdienste- und endgeräteartenunabhängig definiertes Übertragungsprotokoll - virtuelles Terminalprotokoll - für zwischen der Leitungstechnik-Taskstruktur (DH) und der Betriebstechnik-Koordinierung-Taskstruktur (LDU PD) übertragene betriebstechnische Meldungen und ein ebenfalls ebenfalls kommunikationsdienste- und endgeräteartenunabhängig definiertes, eine zumindest annähernd steuerzeichenfreie, gedrängte Datenanordnung vorsehendes weiteres Übertragungsprotokoll - virtuelles Applikationsprotokoll - für innerhalb der Applikation-Taskstruktur (LDU VD) und zwischen dieser und der Betriebstechnik-Koordinierung-Taskstruktur (LDU PD) übertragene Meldungen vorgesehen ist und daß ein Textprozessor-Programmmodul (MMI) zur Konvertierung von Meldungen in einem der beiden Übertragungsprotokolle in Meldungen im jeweils anderen Übertragungsprotokoll dient.

10. Kommunikationssystem nach Anspruch 9,
**dadurch gekennzeichnet,**
daß Meldungen im virtuellen Terminalprotokoll und im virtuellen Applikationsprotokoll derart aufgebaut sind, daß auf ein System-Datenkopfteil mit einer definierten Reihenfolge von Meldungsursprungs- und Meldungszieladressen ein betriebstechnikspezifischer Datenkopfteil mit einer für die beiden Protokolle unterschiedlichen Protokollidentifizierungsinformation, einer Bezeichnung einer Auftragssession, zu der die jeweilige Meldung gehört und einer das für die Abarbeitung der Auftragssession notwendige Applikation-Programmodul (AMA) bezeichnenden Zieladresse.

11. Kommunikationssystem nach Anspruch 10,
**dadurch gekennzeichnet,**
daß das Textprozessor-Programmodul (MMI) in die betriebstechnische Applikation-Taskstruktur (LDU VD) eingefügt ist.

12. Kommunikationssystem nach Anspruch 11,
**dadurch gekennzeichnet,**
daß in die betriebstechnische Koordinierung-Taskstruktur (LDU PD) ein einem Dateiverwaltung-Taskorganisationsprogramm hierarchisch untergeordnetes Dateiverwaltung-Programmodul (FC) zur Steuerung des Zugangs zu peripheren Dateien und in die Leitungstechnik-Taskstruktur (DH) ein Speicher-Programmodul (DHF) zur Steuerung von Such-, Lese- und Schreibaufträgen für die Dateien aufnehmende Speicher eingefügt ist.

13. Kommunikationssystem nach Anspruch 12,
**dadurch gekennzeichnet,**
daß das Koordinierung-Programmodul (SC) derart strukturiert ist, daß es in Abhängigkeit von der Art einer innerhalb eines betriebstechnischen Auftrages angesprochenen Applikation die Ansteuerung des entsprechenden Applikation-Programmoduls (AMA) einleitet.

14. Kommunikationssystem nach Anspruch 13,
**dadurch gekennzeichnet,**
daß in die betriebstechnische Applikation-Taskstruktur (LDU VD) ein einem Applikationsverbindung-Taskorganisationsprogramm hierarchisch untergeordnetes Applikationsverbindung-Programmodul (CC) zum Aufbau und zur Verwaltung der Verbindung des Koordinierung-Programmoduls (SC) mit einem der Applikation-Programmodule (AMA) eingefügt ist.

15. Kommunikationssystem nach Anspruch 14,
**dadurch gekennzeichnet,**
daß das Applikationsverbindung-Programmodul (CC) derart strukturiert ist, daß in der Applikation-Taskstruktur (LDU VD) nicht residente Applikation-Programmodule unter Einbeziehung des Dateiverwaltung-Programmodul (FC) und des Speicher-Programmoduls (DH) aus peripheren Dateien in die Applikation-Taskstruktur (LDU VD) einladbar sind.

16. Kommunikationssystem nach Anspruch 1,
**dadurch gekennzeichnet,**
daß das Verbindungssteuerung-Programmodul (CPTL) direkt dem Vermittlungstechnik-Taskorganisationsprogramm (TOP LDU) untergeordnet ist und die Leistungsmerkmal-Programmodule (LD, TS, PC, NC, CD, SCL, SBTQ) in Form von Unterprogrammen des Verbindungssteuerung-Programmoduls (CPTL) in die Verbindungssteuerung einbezogen sind.

17. Kommunikationssystem nach Anspruch 16,
**dadurch gekennzeichnet,**
daß die Verteilung der leistungsmerkmalbezogenen Programme auf die Leistungsmerkmal-Programmodule (LH, TS, PC, NWC, CD, SCL, SBTQ) derart vorgenommen ist, daß zumindest die auf kommunikationsdienstespezifische Leistungsmerkmale bezogenene Programme jeweils in einem Leistungsmerkmal-Programmodul implementiert sind.

18. Kommunikationssystem nach Anspruch 16 oder 17,
**dadurch gekennzeichnet,**
daß dem Verbindungssteuerung-Programmodul (CPTL) ein Koppelfeldsteuerung-Programmodul (NWC) zugeordnet ist, in dem die Steuerung von Eingabe- und Ausgabespeichern eines digitalen Zeitmultiplex-Koppelfeldes logisch realisiert ist und dem der Eingabe- und Ausgabespeicher (Mlb-DH-NW) der Koppelfeld-Task (DH-NW-T) im Sinne der Umsetzung logischer Meldungen in physikalische Schaltbefehle für das Koppelfeld zugeordnet ist.

19. Kommunikationssystem nach Anspruch 1,
**dadurch gekennzeichnet,**
daß zumindest ein Teil der Geräteprogrammodule (DHT, DHF, DHS, DHA) neben einem auf die Hauptfunktion - Vermittlungstechnik, Betriebstechnik - der zugehörigen Endgeräteart abgestimmten Teilmodul ein weiteres, auf sicherheitstechnische Funktionen abgestimmtes zweites Teilmodul aufweist.

20. Kommunikationssystem nach Anspruch 19,
**dadurch gekennzeichnet,**
daß wenigstens eins der vermittlungstechnischen Endgeräte zugeordneten Geräteprogrammodule (DHS) ein auf betriebstechnische Funktionen abgestimmtes drittes Teilmodul aufweist.

21. Kommunikationssystem nach Anspruch 19 oder 20,
**dadurch gekennzeichnet,**
daß die Geräteprogrammodule (DHT, DHF, DHS, DHA) eine von den Endgeräten bzw. Betriebstechnik-Endgeräten abgegebene Anreize nach individuellen Leitungskriterien bewertende und Meldungen aus der Betriebstechnik-Koordinierung- und Vermittlungstechnik-Taskstruktur (LDU PD) in Einstelldaten für die Endgeräte, Betriebstechnik-Endgeräte oder Alarmanzeigeendgeräte umsetzende Vorverarbeitungs-Programmebene (Prepr) und eine die Anreize aller Endgerätearten mittels systemspezifischer Parameter in protokollgerechte Meldungen umsetzende Bewertungs-Programmebene (Interpr) aufweisen und daß ein in der Bewertungs-Programmebene (Interpr) residentes Zuordnungsprogramm (Mess Assign) jeweils funktionsabhängig Meldungen und Informationen auf die Teilmodule verzweigt.

22. Kommunikationssystem nach Anspruch 1,
**dadurch gekennzeichnet,**
daß in die betriebs- und sicherheitstechnische Taskstruktur (LDU VD) ein Systeminitialisierung-Programmodul (IN) eingefügt ist, das dem Multitasking-Betriebssystem derart zugeordnet ist, daß vom Systeminitialisierung-Programmodul (IN) im Multitasking-Betriebssystem die Initialisierung einer Hochlauftask angeregt wird, die die Initialisierung der Programmodule der Taskstrukturen (DH, LDU PD, LDU VD) koordiniert.

23. Kommunikationssystem nach Anspruch 22,
**dadurch gekennzeichnet,**
daß die Programmodule der Taskstrukturen (DH, LDU PD, LDU VD) derart strukturiert sind, daß sie die Initialisierung der ihnen jeweils zugeordneten Daten und (hardware-) Systemkomponenten steuern.

24. Kommunikationssystem nach Anspruch 23,
**dadurch gekennzeichnet,**
daß die Initialisierung der Systemkomponenten, die nicht eindeutig einem der Programmodule der Taskstrukturen (DH, LDU PD, LDU VD) zugeordnet sind, mittels des Systeminitialisierung-Programmoduls (IN) durchführbar ist.

25. Kommunikationssystem nach Anspruch 1,
**dadurch gekennzeichnet,**
daß ein Systemzustandswiederherstellung-Programmodul (REC) über eine Datentabelle gesteuert ist, die mittels wenigstens eines betriebstechnischen Applikation-Programmoduls (AMA) konfigurierbar ist und in der Informationen über die in den einzelnen Fehlerfällen einzuleitenden Systemzustandswiederherstellungsmaßnahmen einschließlich der Art und des Umfangs von Fehleralarmanzeigen enthalten sind.

26. Kommunikationssystem nach Anspruch 1,
**dadurch gekennzeichnet,**
daß in die betriebs- und sicherheitstechnische Applikation-Taskstruktur (LDU VD) ein der In- und Außerbetriebnahme von Leitungen und Baugruppen des Kommunikationssystems dienendes Inbetriebnahme-Programmodul (PRES) eingefügt ist, das mittels wenigstens eines betriebstechnischen Applikation-Programmoduls (AMA) aufrufbar ist.

27. Kommunikationssystem nach Anspruch 1,
**dadurch gekennzeichnet,**
daß in die betriebs- und sicherheitstechnische Applikation-Taskstruktur (LDU VD) ein Verkehrsdatenerfassung-Programmodul (TC) zur Erfassung teilnehmer- bzw. kommunikationsdienstbezogener Verbindungsinformationen eingefügt ist, dem Verbindungsinformationen von wenigstens einem der in die Koordinierung-Taskstruktur eingefügten Vermittlungsprozedur-Programmodule (CP) nach definierten Vermittlungsprozedurabschnitten in Form von Meldungen des vermittlungstechnikspezifischen Meldungsprotokolls übergeben werden.

## Claims

1. Modularly structured digital communications system for connecting terminals to one another and in particular to public networks,
- having at least one operations-oriented terminal,
- having at least one alarm indicating terminal indicating alarm messages acquired from system security-oriented testing operations, and
- having a central system computer with a system data base (DB) and at least one multitasking operating system
-- for managing a line-oriented task structure (DH) having terminal-type-specific device program modules (DHT, DHF, DHS, DHA) for generating logical messages and/or operations-oriented messages from inputs made at the terminals and/or operations-oriented terminals and for outputting device-type-specific setting data for the terminals and/or operations-oriented terminals or alarm indicating terminals acquired from logical messages or operations-oriented messages or alarm messages,
-- for managing an operations-oriented and switching-oriented coordination task structure (LDU PD) having an operations-oriented coordination program module (SC) for controlling the flow of operations-oriented information and data, having switching procedure program modules (CP) which are structured independently of terminal classes and independently of communication services for the purpose of forming logical subprocesses of the overall switching process in such a way that, in addition to at least one connection control program module (CPTL) for controlling the establishment and clearing of connections, further feature program modules (LH, TS, PC, NC, CD, SCL, SBTQ) for the activation and deactivation of corresponding control procedures are formed, and having at least one security-oriented test and evaluation program module (AUD) for executing non-time-critical security-oriented test and evaluation operations, and
-- for managing an operations-oriented and security-oriented application task structure (LDU VD) having application program modules (AMA, REC) for handling application-oriented functions, for example start-up, maintenance, remote operation, restoration of the system state (recovery),
--- in which at least some of the program modules (DHT...SC...AMA) have access to the data base (DB) individually via defined data base access routines (DBAR) in each case, and
--- for connecting the line-oriented task structure (DH) to the operations-oriented and switching-oriented coordination task structure (LDU PD) or, respectively, for connecting it to the operations-oriented and security-oriented application task structure (LDU VD), a program bus structure (PDM, LDM) having at least one transmission protocol, which is generally defined to be independent of communication services and terminal types, of the messages transmitted via it is formed and managed by the multitasking operating system.

2. Communications system according to Claim 1, characterized in that the device program modules (DHT, DHF, DHS, DHA) are combined in at least one line-oriented task (DH-T), to each of which an input and output memory (Mlb-DH) which is managed by a line-oriented task organization program (TOP-DH) and is operated in the manner of a mailbox is assigned.

3. Communications system according to Claim 2, characterized in that the line-oriented task (DH-T) is supplemented by a switching network task (DH-NW-T) having a switching network device program module (DH-NW) managed by a switching network task organization program (DH-NW-TOP).

4. Communications system according to Claim 2 or 3, characterized in that a peripheral memory (DP-RAM) managed by an input/output processor (IOP) has in each case an input terminal for messages acquired in the line-oriented task (DH-T) and/or in the switching network task (DH-NW-T) for the terminals and output terminal for messages acquired from event signals of the terminals which can be controlled independently of one another in each case.

5. Communications system according to Claim 1, characterized in that the coordination program module (SC) is inserted into a coordination task, to which an input and output memory which is managed by a coordination task organization program and is operated in the manner of a mailbox is assigned.

6. Communications system according to Claim 1, characterized in that the switching procedure program modules (CP) are inserted into at least one switching-oriented task (LDU-T), to which an input and output memory (Mlb-CP) which is managed by a switching-oriented task organization program (TOP-LDU) and is operated in the manner of a mailbox is assigned.

7. Communications system according to Claim 1, characterized in that the security-oriented test and evaluation program modules (AUD) are inserted into a test and evaluation task, to which an input and output memory which is managed by a test and evaluation task organization program and is operated in the manner of a mailbox is assigned.

8. Communications system according to Claims 1 to 7, characterized in that the program bus structure (PDM, LDM) forms a logical network node for the intercommunication of the connection control program modules (CPTL) and at least some of the feature program modules (LH, TS, PC, NC, CD, CDL, CBTQ) with some of the device program modules (DHS) via the input and output memories (Mlb-CP, Mlb-DH) of the switching-oriented task (LDU-T) and the line-oriented task (DH-T).

9. Communications system according to Claim 1, characterized in that provided for the program bus structure (PDM, LDM) is a transmission protocol - virtual terminal protocol - that is defined as independent of communication services and terminal types for operations-oriented messages transmitted between the line-oriented task structure (DH) and the operations-oriented coordination task structure (LDU PD) and a further transmission protocol - virtual application protocol - that is likewise defined as independent of communication services and terminal types and provides a compact data arrangement that is at least virtually free of control characters for messages transmitted within the application task structure (LDU VD) and between the latter and the operations-oriented coordination task structure (LDU PD), and in that a text processor program module (MMI) serves to convert messages in one of the two transmission protocols into messages in the respective other transmission protocol.

10. Communications system according to Claim 9, characterized in that messages in the virtual terminal protocol and in the virtual application protocol are constructed in such a manner that a system data header part with a defined sequence of message origin and message destination addresses is followed by a specific operations-oriented data header part with different protocol identification information for the two protocols, a designation of a job session to which the respective message belongs, and a destination address designating the application program module (AMA) required to execute the job session.

11. Communications system according to Claim 10, characterized in that the text processor program module (MMI) is inserted into the operations-oriented application task structure (LDU VD).

12. Communications system according to Claim 11, characterized in that a file management program module (FC) for controlling the access to peripheral files which is hierarchically subordinate to a file management task organization program is inserted into the operations-oriented coordination task structure (LDU PD) and a memory program module (DHF) for controlling seek, read and write requests for the memories storing the files is inserted into the line-oriented task structure (DH).

13. Communications system according to Claim 12, characterized in that the coordination program module (SC) is structured in such a way that it initiates the selection of the corresponding application program module (AMA) depending on the type of an application addressed within an operations-oriented job.

14. Communications system according to Claim 13, characterized in that an application connection program module (CC) for establishing and managing the connection of the coordination program module (SC) to one of the application program modules (AMA) which is hierarchically subordinate to an application connection task organization program is inserted into the operations-oriented application task structure (LDU VD).

15. Communications system according to Claim 14, characterized in that the application connection program module (CC) is structured in such a way that application program modules which are not resident in the application task structure (LDU VD) can be loaded into the application task structure (LDU VD) from peripheral files using the file management program module (FC) and the memory program module (DH).

16. Communications system according to Claim 1, characterized in that the connection control program module (CPTL) is directly subordinate to the switching-oriented task organization program (TOP LDU) and the feature program modules (LD, TS, PC, NC, CD, SCL, SBTQ) are included in the connection control in the form of subprograms of the connection control program module (CPTL).

17. Communications system according to Claim 16, characterized in that the feature-related programs are distributed to the feature program modules (LH, TS, PC, NWC, CD, SCL, SBTQ) in such a way that at least the programs relating to specific communication service features are implemented in a feature program module in each case.

18. Communications system according to Claim 16 or 17, characterized in that assigned to the connection control program module (CPTL) is a switching network control program module (NWC), in which the control of input and output memories of a digital time-division multiplex switching network is realized logically, and to which the input and output memory (Mlb-DH-NW) of the switching network task (DH-NW-T) is assigned for the purpose of converting logical messages into physical switching commands for the switching network.

19. Communications system according to Claim 1, characterized in that in addition to a submodule adapted to the main function - switching, operating - of the associated terminal type, at least some of the device program modules (DHT, DHF, DHS, DHA) have a further second submodule adapted to security-oriented functions.

20. Communications system according to Claim 19, characterized in that at least one of the device program modules (DHS) assigned to switching-oriented terminals has a third submodule adapted to operations-oriented functions.

21. Communications system according to Claim 19 or 20, characterized in that the device program modules (DHT, DHF, DHS, DHA) have a preprocessing program level (Prepr) which evaluates event signals output by the terminals or operations-oriented terminals according to individual line criteria and converts messages from the operations-oriented coordination and switching-oriented task structure (LDU PD) into setting data for the terminals, operations-oriented terminals or alarm indicating terminals, and an evaluation program level (Interpr) which converts the event signals of all terminal types into protocol-compliant messages by means of system-specific parameters, and in that an assignment program (Mess Assign) resident on the evaluation program level (Interpr) distributes messages and information to the submodules depending on the function in each case.

22. Communications system according to Claim 1, characterized in that a system initialization program module (IN) is inserted into the operations-oriented and security-oriented task structure (LDU VD), which program module is assigned to the multitasking operating system in such a way that the initialization of a start-up task which coordinates the initialization of the program modules of the task structures (DH, LDU, PD, LDU VD) is triggered by the system initialization program module (IN) in the multitasking operating system.

23. Communications system according to Claim 22, characterized in that the program modules of the task structures (DH, LDU, PD, LDU VD) are structured in such a way that they control the initialization of the data and (hardware) system components assigned to them in each case.

24. Communications system according to Claim 23, characterized in that the initialization of the system components that are not unambiguously assigned to one of the program modules of the task structures (DH, LDU PD, LDU VD) can be performed by means of the system initialization program module (IN).

25. Communications system according to Claim 1, characterized in that a system state restoration program module (REC) is controlled via a data table which can be configured by means of at least one operations-oriented application program module (AMA), and which contains information about the system state restoration measures to be initiated in the individual error cases, including the type and the extent of fault alarm indications.

26. Communications system according to Claim 1, characterized in that a start-up program module (PRES) which serves to start up and shut down lines and modules of the communications system and which can be called up by means of at least one operations-oriented application program module (AMA) is inserted into the operations-oriented and security-oriented application task structure (LDU VD).

27. Communications system according to Claim 1, characterized in that a traffic data capture program module (TC) for capturing user-related or communication service-related connection information is inserted into the operations-oriented and security-oriented application task structure (LDU VD), to which traffic data program module connection information from at least one of the switching procedure program modules (CP) inserted into the coordination task structure is passed in accordance with defined switching procedure sections in the form of messages of the specific switching-oriented message protocol.

## Revendications

1. Système de communication numérique à structure modulaire pour la liaison de terminaux entre eux et notamment à des réseaux publics,
- comportant au moins un terminal technique de service,
- au moins un terminal d'affichage d'alarme indiquant des signalisations d'alarme obtenues à partir de processus de contrôle effectués dans le cadre de la technique de sécurité du système, et
- un ordinateur central du système comportant une base de données (DB) du système et au moins un système d'exploitation multitâches,
-- pour la gestion d'une structure de tâches de la technique des lignes (DH) comportant des modules de programmes d'appareils (DHT, DHF, DHS, DHA) spécifiques aux types de terminaux et servant à produire des signalisations logiques et/ou des signalisations techniques de service à partir d'entrées réalisées dans des terminaux et/ou dans des terminaux techniques de service et pour la délivrance de données de réglage spécifiques aux types d'appareils et obtenus à partir de signalisations logiques ou de signalisations techniques de service ou de signalisations d'alarme, pour les terminaux et/ou les terminaux techniques de service ou les terminaux d'affichage d'alarme,
-- pour la gestion d'une structure de tâches de coordination technique de service et de coordination technique de commutation (LDU PD) comportant un module de programme de coordination technique de service (ST) pour la commande du flux d'informations et de données techniques de service, des modules (CP) de programmes de la procédure de commutation, qui sont structurés indépendamment des classes de terminaux et indépendamment des services de communication dans le sens de la formation de processus partiels logiques de l'ensemble du processus de commutation de telle sorte qu'en dehors d'au moins un module de programme de commande de liaison (CPTL) pour la commande de l'établissement et de la suppression de liaisons sont formés d'autres modules de programmes de caractéristiques de puissance (LH, TS, PC, NC, CD, SCL, SBTQ) pour l'activation et la désactivation de procédures correspondantes de commande et avec au moins un module de programme de contrôle et d'évaluation techniques de sécurité (AUD) pour l'exécution d'opérations de contrôle et d'évaluation techniques de sécurité, non critiques dans le temps et
-- pour la gestion d'une structure de tâches d'application technique de service et d'application technique de sécurité (LDU VD) avec des modules de programme d'application (AMA, REC) pour l'exécution de fonctions axées sur des applications, par exemple la mise en service, la maintenance, la technique de télécommande, le rétablissement de l'état du système (recovery),
--- la base de données (DB) étant accessible pour au moins une partie des modules de programmes (DHT...SC...AMA) respectivement individuellement par l'intermédiaire de sous-programmes définis (DBAR) d'accès à la base de données, et
--- pour la liaison de la structure de tâches (DH) de la technique des lignes à la structure de tâches de coordination technique de service et de coordination technique de commutation (LDU PD) ou pour sa liaison à la structure de tâches d'application de service et d'application technique de fonctionnement (LDU VD), une structure de programme (PDM, LDM) est formée et gérée par le système de service mutitâches à l'aide d'au moins un protocole de transmission, fixé d'une manière valable de façon générale indépendamment du service de communication et indépendamment du type de terminaux, des signalisations transmises par l'intermédiaire de cette structure.

2. Système de communication suivant la revendication 1, caractérisé par le fait que les modules de programmes d'appareils (DHT, DHF, DHS, DHA) sont rassemblés dans au moins une tâche (DH-T) de la technique des lignes, à laquelle est associée respectivement une mémoire d'entrée et de sortie (M1b-DH) fonctionnant à la manière d'une boîte aux lettres et gérée par un programme (TOP-DH) d'organisation des tâches de la technique des lignes.

3. Système de communication suivant la revendication 2, caractérisé par le fait que la tâche (DH-T) de la technique des lignes est complétée par une tâche de champ de couplage (DH-NW-T) avec un module de programme d'appareil de champ de couplage (DH-NW), géré par un programme (DH-NW-TOP) d'organisation de couplage du champ de couplage.

4. Système de communication suivant la revendication 2 ou 3, caractérisé par le fait qu'une mémoire périphérique (DP-RAM) gérée par un processeur d'entrée/sortie (IOP) possède des bornes d'entrée respectives, qui peuvent être commandées respectivement indépendamment les unes des autres, pour les signalisations, obtenues dans la tâche (DH-T) de la technique des lignes et/ou de la tâche de champ de couplage (DH-NW-T) pour les terminaux et des bornes de sortie respectives pour des signalisations obtenues à partir de stimulations des terminaux.

5. Système de communication suivant la revendication 1, caractérisé par le fait que le module de programme de coordination (SC) est inséré dans une tâche de coordination, à laquelle est associée une mémoire d'entrée et de sortie fonctionnant en boîte aux lettres et gérée par un programme d'organisation de tâches de coordination.

6. Système de communication suivant la revendication 1, caractérisé par le fait que les modules de programme de la procédure de commutation (CP) sont insérés dans au moins une tâche de la technique de commutation (LDU-T), à laquelle est associée une mémoire d'entrée et de sortie (M1b-CP) qui fonctionne en boîte aux lettres et est gérée par un programme d'organisation de tâches de la technique de commutation (TOP-LDU).

7. Système de communication suivant la revendication 1, caractérisé par le fait que les modules de programme de contrôle et d'évaluation technique de sécurité (AUD) sont insérés dans une tâche de contrôle et d'évaluation, à laquelle est associée une mémoire d'entrée et de sortie fonctionnant en boîte aux lettres et gérée par un programme d'organisation de tâches de contrôle et d'évaluation.

8. Système de communication suivant l'une des revendications 1 à 7, caractérisé par le fait que la structure de bus de programme (PDM, LDM) forme un noeud de réseau logique pour l'intercommunication des modules de programme de commande de liaison (CPTL) et au moins une partie des modules de programme de caractéristiques potentielles (LH, TS, PC, NC, CD, CDL, CBTQ) avec une partie des modules de programmes d'appareils (DHS), par l'intermédiaire des mémoires d'entrée et de sortie (M1b-CP, M1b-DH) de la tâche technique de commutation (LDU-T) et de la tâche technique de la technique des lignes (DH-T).

9. Système de communication suivant la revendication 1, caractérisé par le fait que pour la structure de bus de programme (PDM, LDM), un protocole de transmission défini d'une manière indépendante des services de communication et des types de terminaux - un protocole de terminal virtuel - pour des signalisations techniques de service transmises entre la structure de tâches de la technique des lignes (DH) et la structure de tâches de coordination technique de service (LDU PD), et un autre protocole de transmission défini également d'une façon indépendante des services de communication et des types de terminaux et prévoyant une disposition tassée des données, au moins approximativement exempte de signaux de commande, - un protocole d'application virtuel - sont prévus pour des signalisations transmises à l'intérieur de la structure de tâches d'application (LDU VD) et entre cette dernière et la structure de tâches de coordination technique de service (LDU PD), et qu'un module de programme de processeur de texte (MMI) sert à convertir des signalisations situées dans l'un des deux protocoles de transmission en des signalisations situées dans l'autre protocole respectif de transmission.

10. Système de communication suivant la revendication 9, caractérisé par le fait que des transmissions dans le protocole virtuel de terminal et dans le protocole virtuel d'application sont constituées de telle sorte qu'une partie de tête des données, qui est spécifique à la technique de service et comporte une information d'identification de protocole, qui est différente pour les deux protocoles, une désignation d'une session de traitement d'ordres, dont fait partie la signalisation respective, et d'une adresse de destination désignant le module de programme d'application (AMA) nécessaire pour le traitement de la session de traitement d'ordres est insérée dans une partie de tête de données du système comportant une suite définie d'adresses d'origine et d'adresses de destination de signalisations.

11. Système de communication suivant la revendication 10, caractérisé par le fait que le module de programme (MMI) du processeur de texte est inséré dans la structure de tâche d'application technique de service (LDU VD).

12. Système de communication suivant la revendication 11, caractérisé par le fait qu'un module de programme de gestion de fichiers (FC), subordonné hiérarchiquement à un programme d'organisation de tâches de gestion de fichiers servant à commander l'accès à des fichiers périphériques est inséré dans la structure de tâches de coordination technique de service (LDU PD), et qu'un module de programme de mémoire (DHF) servant à commander les ordres de recherche, de lecture et d'enregistrement pour des mémoires logeant les fichiers est inséré dans la structure de tâches de la technique des lignes (DH).

13. Système de communication suivant la revendication 12, caractérisé par le fait que le module de programme de coordination (SC) est structuré de telle sorte qu'en fonction du type d'une application indiquée à l'intérieur d'un ordre technique de service, il déclenche la commande du module de programme d'application correspondant (AMA).

14. Système de communication suivant la revendication 13, caractérisé par le fait qu'un module de programme de liaison d'application (CC), subordonné hiérarchiquement à un programme d'organisation de tâches de liaison d'application et servant à établir et gérer la liaison du module de programme de coordination (SC) avec l'un des modules de programmes d'application (AMA) est inséré dans la structure de tâches d'application de service (LDU VD).

15. Système de communication suivant la revendication 14, caractérisé par le fait que le module de programme de liaisons d'application (CC) est structuré de telle sorte que des modules de programmes d'application, qui ne résident pas dans la structure de tâches d'application (LDU VD) peuvent être chargés dans la structure de tâches d'application (LDU VD) moyennant l'insertion du module de programme de gestion de fichiers (FC) et du module de programme de la mémoire (DH), à partir de fichiers périphériques.

16. Système de communication suivant la revendication 1, caractérisé par le fait qu'un module de programme de commande de liaison (CPTL) est subordonné directement au programme (TOP LDU) d'organisation des tâches techniques de commutation et que les modules de programmes de caractéristiques potentielles (LD, TS, PC, NC, CD, SCL, SBTQ) sont insérés sous la forme de sous-programmes du module de programme de commande de liaison (CPTL), dans la commande de la liaison.

17. Système de communication suivant la revendication 16, caractérisé par le fait que la répartition des programmes, rapportée aux caractéristiques potentielles entre les modules de programmes de caractéristiques potentiels (LH, TS, PC, NWC, CD, SCL, SBTQ) est réalisée de telle sorte qu'au moins les programmes rapportés à des caractéristiques potentielles spécifiques aux services de communication sont mis en oeuvre respectivement dans un module de programme de caractéristiques potentielles.

18. Système de communication suivant la revendication 16 ou 17, caractérisé par le fait qu'au module de programme de commande de liaison (CPTL) est associé un module de programme de commande de champ de couplage (NWC), dans lequel la commande de mémoires d'entrée et de sortie d'un champ de couplage numérique à multiplexage temporel est réalisée logiquement et auquel la mémoire d'entrée et de sortie (M1b-DH-NW) de la tâche de champ de couplage (DH-NW-T) est associée dans le sens d'une conversion de signalisation logique en des instructions physiques de commutation pour le champ de couplage.

19. Système de communication suivant la revendication 1, caractérisé par le fait qu'au moins une partie des modules de programmes d'appareils (DHT, DHF, DHS, DHA) possède, en dehors d'un module partiel réglé sur la fonction principale - technique de commutation, technique de service - du type de terminal associé, un second autre module partiel réglé sur des fonctions techniques de sécurité.

20. Système de communication suivant la revendication 19, caractérisé par le fait qu'au moins l'un des modules de programmes d'appareils (DHS) associé aux terminaux techniques de commutation, possède un troisième module réglé sur des fonctions techniques de service.

21. Système de communication suivant la revendication 19 ou 20, caractérisé par le fait que les modules de programmes d'appareils (DHT, DHF, DHS, DHA) comportent un plan de programme de traitement préalable (Prepr), qui évalue selon des critères individuels de lignes, des stimuli délivrés par les terminaux ou les terminaux techniques de service, et convertit des signalisations délivrées par la structure de tâches de coordination technique de service et de coordination technique de commutation (LDU PD) en des données de réglage pour les terminaux, les terminaux techniques de service ou les terminaux d'indication d'alarme, et un plan de programme d'évaluation (Interpr) qui convertit les stimuli de tous les types de terminaux, au moyen de paramètres spécifiques au système en des signalisations conformes au protocole, et qu'un programme d'association (Mess Assign), qui réside dans le plan du programme d'évaluation (Interpr) répartit des signalisations et des informations entre les modules partiels, respectivement en fonction du fonctionnement.

22. Système de communication suivant la revendication 1, caractérisé par le fait que dans la structure de tâches techniques de service et de sécurité (LDU VD) est inséré un module (IN) de programme d'initialisation du système, qui est associé au système de fonctionnement multitâches de telle sorte que l'initialisation d'une tâche de fonctionnement à régime élevé est déclenchée par le module (IN) de programme d'initialisation du système, dans le système de fonctionnement multitâches, cette initialisation coordonnant l'initialisation des modules de programmes des structures de tâches (DH, LDU PD, LDU VD).

23. Système de communication suivant la revendication 22, caractérisé par le fait que les modules de programmes des structures de tâches (DH, LDU PD, LDU VD) sont structurés de telle sorte qu'ils commandent l'initialisation des données qui leur sont respectivement associées et des composants (matériels) du système, qui leur sont associés.

24. Système de communication suivant la revendication 23, caractérisé par le fait que l'initialisation des composants du système, qui ne sont pas associés de façon nette à l'un des modules de programme des structures de tâches (DH, LDU PD, LDU VD), peut être exécutée au moyen du module (IN) de programme d'initialisation du système.

25. Système de communication suivant la revendication 1, caractérisé par le fait qu'un module de programme (REC) de rétablissement de l'état du système est commandé par l'intermédiaire d'un tableau de données, qui peut être configuré à l'aide d'au moins un module de programme d'application technique de service (AMA) et dans lequel sont contenues des informations concernant les dispositions de rétablissement de l'état du système, qui doivent être déclenchées dans les différents cas de défauts, y compris le type et le volume des indications d'alarme de défauts.

26. Système de communication suivant la revendication 1, caractérisé par le fait que dans la structure de tâches d'applications techniques de service et de sécurité (LDU VD) est inséré un module de programme de mise en service (PRES), qui est utilisé pour la mise en service et la mise hors service de lignes et de modules du système de communication et qui peut être appelé à l'aide d'au moins un module de programme d'application technique de service (AMA).

27. Système de communication suivant la revendication 1, caractérisé par le fait que dans la structure de tâches d'applications techniques de service et de sécurité (LDU VD) est inséré un module de programme (TC) de détection de données de trafic, qui sert à détecter des informations de liaison se rapportant à l'abonné ou au service de communication et auquel sont transférées des informations de liaison d'au moins l'un des modules de programmes de procédures de commutation (CP) insérés dans la structure de tâche de coordination, selon des sections définies de procédure de commutation, sous la forme de signalisations du protocole de signalisation spécifique à la technique de commutation.
